(19) Europäisches Patentamt
European Patent Office
Office européen des brevets

(11) **EP 4 113 401 A1**

(12) **EUROPEAN PATENT APPLICATION**

(43) Date of publication:
**04.01.2023 Bulletin 2023/01**

(21) Application number: **22182661.3**

(22) Date of filing: **01.07.2022**

(51) International Patent Classification (IPC):
**G06Q 10/00** (2012.01)     **G06Q 10/04** (2012.01)
**G06Q 10/06** (2012.01)

(52) Cooperative Patent Classification (CPC):
**G06Q 10/00; G06Q 10/04; G06Q 10/06;**
**G06Q 10/0633; G06Q 10/0637; G06Q 10/067**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.07.2021 US 202163217705 P**
**22.11.2021 US 202117532624**

(71) Applicant: **UBiqube (Ireland) Limited**
**Dublin, D07 TK88 (IE)**

(72) Inventors:
• **Raj, Amit**
**Dublin, D15 R8R2 (IE)**

• **Souli, Nabil**
**981000 Honore Labande (MC)**
• **Guesdon, Herve**
**38570 Isere (FR)**
• **Collins, John**
**Dublin, D15 RD2V (IE)**
• **Elias Camponez Di Salles Ferreira, Eduardo**
**Dublin, D01 (IE)**

(74) Representative: **Schütte, Gearoid**
**Cruickshank**
**8a Sandyford Business Centre**
**Sandyford**
**Dublin D18 R2N8 (IE)**

(54) **SYSTEMS AND METHODS FOR AUTOGENERATION OF INFORMATION TECHNOLOGY INFRASTRUCTURE PROCESS AUTOMATION AND ABSTRACTION OF THE UNIVERSAL APPLICATION OF REINFORCEMENT LEARNING TO INFORMATION TECHNOLOGY INFRASTRUCTURE COMPONENTS AND INTERFACES**

(57) Information defining a plurality of states, a plurality of transitions, an initial state, and a final state is received from a user. The user may also provide additional information including pre-conditions and post-conditions for one or more transitions. Context information including one or more context variables and context variable values is generated based on the information provided by the user. A first plurality of possible paths between the initial state and the final state is automatically identified, wherein each path traverses at least one state and at least one transition. A second plurality of paths is identified from among the plurality of paths, based on the context information and the pre-conditions defined by the user. A Q-value is determined for each path in the second plurality of paths, using the rewards. A path having a highest Q-value is selected and presented to the user as a BPM. An acceptance or rejection of the proposed BPM is received from the user. Reward values associated with transitions in the selected path are updated, if the user accepts the proposed BPM.

FIG. 6

EP 4 113 401 A1

**Description**

**TECHNICAL FIELD**

This specification relates generally automation of processes, and more particularly to systems and methods for autogeneration of information technology infrastructure process automation and abstraction of the universal application of reinforcement learning to information technology infrastructure components and interfaces.

**BACKGROUND**

IT infrastructure encompasses any technology involved in interconnecting an end user's terminal (phone, computer, etc.) or a robot (IoT, etc.) with an application (software). By nature this involves a large variety of technologies (network systems, security systems, Data Centres and their related ecosystem, etc..) each of which requiring highly skilled engineers and experts to set up (configure), operate and troubleshoot.

The IT infrastructure space is hence a cascade of domains (or fields) with different vendors, practices and protocols entertaining complexity by design. The very nature of this technological landscape slows transversal innovation, in particular in terms of automation of infrastructure operations which consequently artificially keeps costs of ownership high.

The emergence of artificial intelligence (AI) and machine learning (ML) technologies in the past decade should benefit the Infrastructure operations as much as they do anything related to application and data handling. In particular, if AI and ML were to be applied to the design of 'cross domain' infrastructure automation processes without it being restrained by an expertise gap within any of the domains involved, this would dramatically speed up the automation of the IT infrastructure and all of its processes.

Furthermore, if the very design of automation process was itself simplified, or even better, automatically generated from a user's operational intent, the entire IT infrastructure would then become a commodity to be consumed by, easier to source, application centric IT staff and would hence be cheaper to acquire and operate.

The latter is of crucial importance in price sensitive markets or countries left behind by digital transformation train.

**SUMMARY**

In accordance with an embodiment, a method of automatically generating a business process model (BPM) based on user inputs (indicating the user's operational intent) is provided. Information defining at least a plurality of states, a plurality of transitions, an initial state, and a final state is received from a user. The user may also provide additional information including pre-conditions and post-conditions for one or more transitions. Context information including one or more context variables and context variable values is generated based on the information provided by the user. A first plurality of possible paths between the initial state and the final state is automatically defined, wherein each path traverses at least one state and at least one transition. A second plurality of valid paths is identified from among the plurality of paths, based on the context information and the pre-conditions defined by the user. A reward value is determined for each path in the second plurality of paths. A path having a highest reward value is selected and presented to the user as a BPM. An acceptance or rejection of the proposed BPM is received from the user. Reward values associated with transitions in the selected path are updated, if the user accepts the proposed BPM. If the user rejects the proposed BPM, another BPM may be generated.

In one embodiment, second information defining the plurality of states and the plurality of transitions is received from the user. Third information specifying one of the plurality of states as the final state is received from the user. A state action graph (SAG) is generated based on the plurality of states and the plurality of transitions. An initial state is determined by performing the following series of operations. A first set of first initial state candidates by: starting at the final state, back-traversing the SAG to generate a plurality of first initial state candidates, and including the plurality of first initial state candidates in the first set of initial state candidates. A second set of second initial state candidates is defined by performing the following steps. A plurality of states in the SAG are identified. For each state in the plurality of states, one or more state variables associated with the state are identified and a predefined state value for each variable are identified, thereby defining a set of predetermined state values. An actual value is determined for each variable, thereby defining a set of actual values. The state is included in the second set of second initial state candidates, if the set of actual values is the same as the set of predetermined state values. A third set of third initial state candidates is defined to include states that are present in both the first set of first initial state candidates and in the second set of second initial state candidates. The third set of third initial state candidates is presented to the user. A selection of one of the third initial state candidates is received from the user. The initial state is defined to be the selected one of the third initial state candidates.

In another embodiment, a plurality of paths is automatically defined between the initial state and the final state by performing the following steps. A set of context variables and corresponding set of context variable values are obtained from the user. A plurality of paths is identified between the initial state and the final state. A set of candidate paths between the initial state and the final state is defined by repeatedly performing a series of first operations including: selecting one of the paths from the plurality of paths, and repeatedly performing, for each state-transition pair in the selected path, a series of second operations including: selecting a state-transition pair in the selected path, wherein the transition of the state-transition pair is associated with one or more condition variables, and one or more predetermined condition values each corresponding to a respective one of the one or more condition variables, an action, and a post-condition; determining whether the set of context variables includes the set of condition variables and whether the set of context variable values is the same as the set of predetermined condition values; and if the set of context variables includes the set of condition variables and the set of context variable values is the same as the set of predetermined condition values, performing a series of third operations including: performing the action; updating the set of context variables and the set of context variable values based on the post-condition associated with the transition; and including the selected path to the set of candidate paths, if performing the action results in the final state.

In another embodiment, the one or more condition variables associated with at least one transition of at least state-transition includes latency.

In another embodiment, a plurality of Q-values in a Q-table is generated, wherein each Q-value represents a reward value for a state-transition pair in the SAG. A path is selected from among the set of candidate paths based on the Q-values in the Q-table. The selected path is presented to the user. An acceptance of the selected path or a rejection of the path is received from the user. If an acceptance of the selected path is received from the user, at least one Q-value associated with at least one state-transition pair in the selected path is increased.

In another embodiment, at least one Q-value associated with at least one state-transition pair in the selected path is increased by performing the following steps. For each state-transition pair in the selected path, performing a fourth series of operations including identifying from the Q-table a Q-value associated with the transition of the respective state-transition pair, identifying a set of outgoing transitions from the state of the respective state-transition pair, identifying, for each outgoing transition, a Q-value from the Q-table, thereby generating a set of Q-values, identifying a highest Q-value in the set of Q-values, determining a value Q' by determining a maximum value of the expression:

$$\frac{(Q' + ZQ)}{Z}$$

as Z is varied, updating the Q-value associated with the transition of the respective state-transition pair to be equal to the highest Q-value in the set of Q-values, if the highest Q-value in the set of Q-values is greater than Q', and updating the Q-value associated with the transition of the respective state-transition pair to be equal to Q', if Q' is greater than the highest Q-value in the set of Q-values.

In another embodiment, the business process model represents a process in one of a networking domain and a cloud infrastructure domain.

In accordance with another embodiment, a system includes a memory adapted to store data and a processor. The processor is adapted to receive from a user information defining at least a plurality of states, a plurality of transitions, an initial state, and a final state, automatically define a plurality of paths between the initial state and the final state, each path traversing at least one state and at least one transition, determine a reward value for each path in the plurality of paths; and select as a business process model a path having a highest reward value.

These and other aspects of the present Invention will be more fully understood by reference to one of the following drawings.

BRIEF DESCRIPTION OF THE DRAWINGS

FIG. 1 illustrates a system including a multi-domain Abstract Reinforcement Learning and an Abstract Domain model in accordance with an embodiment;
FIG. 2 represents an excerpt from Semantics of Business Vocabulary and Rules (SBVR), which represents a vocabulary to define the Concepts in any domain and relationships between them;
FIG. 3 illustrates two different business facts from two different domains;
FIG. 4A shows conventional constituents of RL and which parts require programming language expertise;
FIG. 4B shows a representation of a multi-domain abstract Reinforcement Learning model and its constituents as well as how these constituents are associated with an existing abstract domain model (i.e., SBVR) in accordance with an embodiment;

FIG. 5A shows a communication system in accordance with an embodiment;

FIG. 5B shows components of a BPM generation system in accordance with an embodiment;

FIG. 6 is a flowchart of a method in accordance with an embodiment;

FIG. 7A shows a graphical user interface (GUI) that enables a user to define a State in accordance with an embodiment;

FIG. 7B shows a GUI that enables a user to define an action associated with a Transition in accordance with an embodiment;

FIG. 7C illustrates use of the GUI of FIG. 7B to define a condition in accordance with an embodiment;

FIG. 8 shows a GUI 810 that enables a user to select one or more outgoing Transitions associated with a particular State;

FIG. 9 shows a GUI that enables a user to select multiple outgoing Transitions for a State in accordance with an embodiment;

FIG. 10 shows a portion of a state action graph (SAG) in accordance with an embodiment;

FIG. 11 shows a GUI 1160 that enables a user to define a Final State in accordance with an embodiment;

FIG. 12 shows a GUI that allows a user to select a learning rate in accordance with an embodiment;

FIG. 13 shows GUI that enables a user to select a discount factor in accordance with an embodiment;

Fig. 14 shows a GUI enables a user to select a Final State Reward value in accordance with an embodiment;

FIG. 15 shows a GUI that enables a user to select one or more relevant transitions that the user desires in the final BPM in accordance with an embodiment;

FIG. 16 shows a GUI that enables a user to specify an Initial Context in accordance with an embodiment;

FIGS. 17A-17C include a flowchart of a method of identifying one or more Initial States in accordance with an embodiment;

FIG. 18 shows an exemplary SAG in accordance with an embodiment;

FIG. 19A shows a state action graph with a first set of initial state candidates indicated by shading;

FIG. 19B shows a state action graph with a second set of initial state candidates indicated by shading;

FIG. 20 shows a GUI that presents initial state candidates to a user and enables the user to select an Initial State in accordance with an embodiment

FIG. 21A shows a GUI that includes a plurality of possible Initial States in accordance with an embodiment;

FIG. 21B shows a GUI that indicates an Initial State selected by a user in accordance with an embodiment;

FIG. 22 shows state action graph in accordance with an embodiment;

FIG. 23 shows a GUI that includes an option to generate a BPM in accordance with an embodiment;

FIGS. 24A-24E include a flowchart of a method of identifying a plurality of paths between an Initial State and a Final State in accordance with an embodiment;

FIG. 25A shows a path that may be selected in accordance with an embodiment;

FIG. 25B shows a GUI displaying a proposed BPM in accordance with an embodiment;

FIGS. 26A-26D include a flowchart of a method of selecting a path from among a set of candidate paths based on reward values associated with the paths, receiving user input concerning the selected path, and updating the rewards based on the user input in accordance with an embodiment;

FIG. 27 shows a Q-Table in accordance with an embodiment;

FIG. 28 shows a State and a plurality of outgoing Transitions associated with the State in accordance with an embodiment; and

FIG. 29 shows components of an exemplary computer that may be used to implement various embodiments.

DETAILED DESCRIPTION

Systems and methods for automatically generating a business process model based on input from a user (indicating the user's operational intent) are disclosed. Advantageously, these systems and methods enable a user with no programming expertise to generate a business process model (BPM) using Reinforcement Learning.

In accordance with an embodiment, the system provides a series of graphical user interfaces (GUIs) that enable a user to define a plurality of states and a plurality of transitions. The system also allows the user to specify a final state. The final state represents the user's intention - the state that the user wishes to achieve.

Each state and each transition may be defined as having one or more associated variables and predetermined values for the variables. The user may also provide additional information including pre-conditions and post-conditions pertinent to one or more transitions.

Context information including one or more context variables and context variable values is generated based on the information provided by the user. For example, the context variables may include the variables selected by the user for various states and transitions.

A state action graph (SAG) is generated based on the plurality of states and the plurality of transitions defined by the user.

The system advantageously assists the user in selecting an initial state in the following manner. Starting from the final state, the SAG is back-traversed to generate a first set of initial state candidates. A second set of initial state candidates is determined by analyzing, for each of a plurality of states, one or more variables associated with the state, and including in the second set those states for which predetermined values of the variables are the same as the actual values of the variables. States that are present in both the first and second sets of initial state candidates are presented to the user as possible initial states. The user selects one of the possible initial states to be the initial state.

After the initial state, a plurality of possible paths between the initial state and the final state is automatically defined, wherein each possible path traverses at least one state and at least one transition. Each state-transition pair in each possible path is analyzed to determine if it is valid by comparing any associated condition variables to the context variables. If all of the state-transition pairs in a possible path are valid, the path is determined to be valid. In this manner, a subset of valid paths is identified.

A Q-Table specifying a reward value for each state-transition pair in the SAG is generated. A cumulative reward value is determined for each path in the subset of valid paths. A path having a cumulative highest reward value is selected from the subset of valid paths as a proposed BPM.

The system presents the proposed BPM to the user and allows the user to accept or reject the proposed BPM. If the user accepts the proposed BPM, reward values associated with transitions in the selected path are updated. If the user rejects the proposed BPM, another BPM is automatically generated.

The following terms and acronyms are used herein:

RL - Reinforcement Learning

AI - Artificial Intelligence

ML - Machine Learning

RPA - Robotic Process Automation

BPM - Business Process Model

SAG - State Action Graph

SBVR - Semantics of Business Vocabulary and Rules

SME - Subject Matter expert

In accordance with an embodiment, an abstracted reinforcement learning (RL) model that automatically generates infrastructure process automation 'candidates' based on a user's operational intent and the best candidate among them is provided. The abstraction of the RL model enables users to adapt it to each domain rules and practices without requiring any particular expertise in RL, ML or AI.

Systems, devices, and methods described herein are applicable to the entirety of the IT infrastructure continuum including networks, security systems, datacenter technologies (cloud) compute, robots, IoT devices, and any IT component of which the purpose is to provide an application with means to 'operate'; these means could be physical (memory, processing, etc.) or virtual (K8, containers, VM, etc.).

The Abstracted RL model relies on an underlying infrastructure configuration abstraction which decorrelates vendor and system syntax from the processes to be executed (workflows). The tight coupling between the RL abstraction and the infrastructure abstraction leads to simplicity and 'domain transparency'.

Organisations spend a substantial amount of resources to develop processes orchestration (e.g., BPMs), which allows users to fulfil their business goals. Organizations usually hire specific subject matter experts (SMEs) to design BPMs and expert engineers to implement those BPMs.

Artificial Intelligence (AI) and Machine Learning (ML) are emerging technologies that help machines to think and take decisions just like humans do. Artificial intelligence observes patterns in the data, learns from those patterns and if needed, take decisions based on the past experiences of learning. AI employs ML mechanisms to analyse data. ML is a field of study in Computer Science which helps machines to learn and take decisions, with minimal human intervention.

Reinforcement Learning (RL), a type of ML algorithm, that helps software to decide what action should be taken under certain rules to achieve a goal, with the best possible reward. A RL expert defines such rules in a programmed way using a programming language (e.g., Python, Php, scala, etc.). In RL terminology, such rules are named as an Environment. The RL expert also defines the possible actions which can be taken on the defined Environment. In addition, the RL expert describes a Reward Policy Function which helps RL to decide whether a performed action was good or bad. When the action is good, RL rewards the action, otherwise the action is penalized. Using such learning of good and bad actions, RL finds a sequence of good actions to fulfill a goal.

However, in an existing conventional RL mechanism, the Environment and Reward Policy Function often need to be developed from scratch for each use case for each domain. This is very cumbersome, time consuming, and expensive as multiple technical experts typically need to work to develop an RL mechanism for multiple domains.

Advantageously, an abstract RL mechanism which can be re-used across multiple domains and has less dependency on technical experts provides substantial benefits to organizations and businesses as such a mechanism reduces the time and money required. Moreover, an abstract RL mechanism allows non-technical business users a greater ability to control the development of BPM candidates, and may even allow such users to develop the BPMs by themselves.

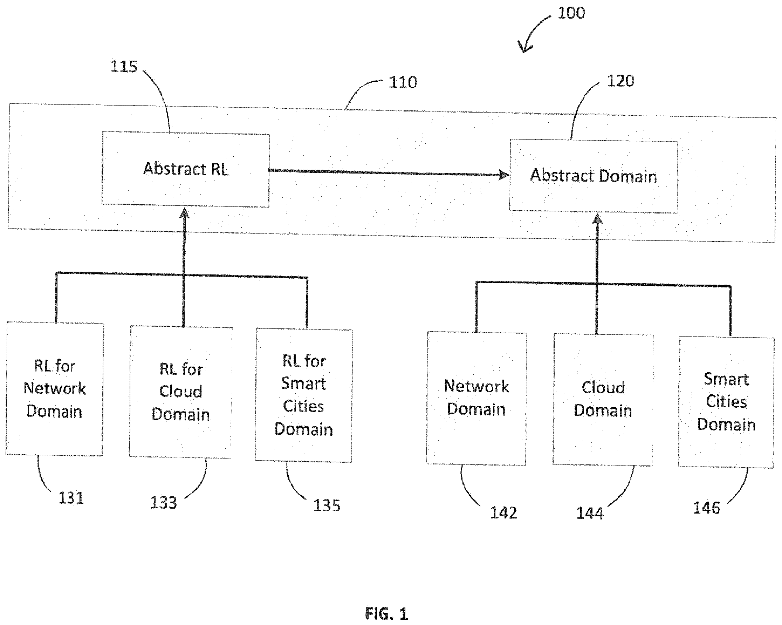

It has been observed that there is a tight coupling between a multi-domain Abstract RL and an Abstract Domain model. FIG. 1 illustrates a system 100 including a multi-domain Abstract RL 115 and an Abstract Domain model 120 in accordance with an embodiment. FIG. 1 represents the concept that most domain models can be abstracted into an abstract domain model, and that an abstract RL mechanism can be generated based on the abstract domain model.

Abstract RL 115 represents, for example, an RL for Network Domain (131), an RL for Cloud Domain (133), an RL for Smart Cities Domain (135), etc.. Abstract Domain 120 represents, for example, a Network Domain (142), a Cloud Domain (144), a Smart Cities Domain (146), etc. It is posited that a coupling exists between the multi-domain Abstract RL and the Abstract Domain model because the Abstract Domain concepts and processes can be orchestrated by the Abstract RL, e.g., create a device, then attach the device to a network, and then create a firewall in the device. If RL is leveraged to generate BPMs, such a coupling allows non-expert users to utilise RL to generate infrastructure BPM 'candidates' across multiple domains.

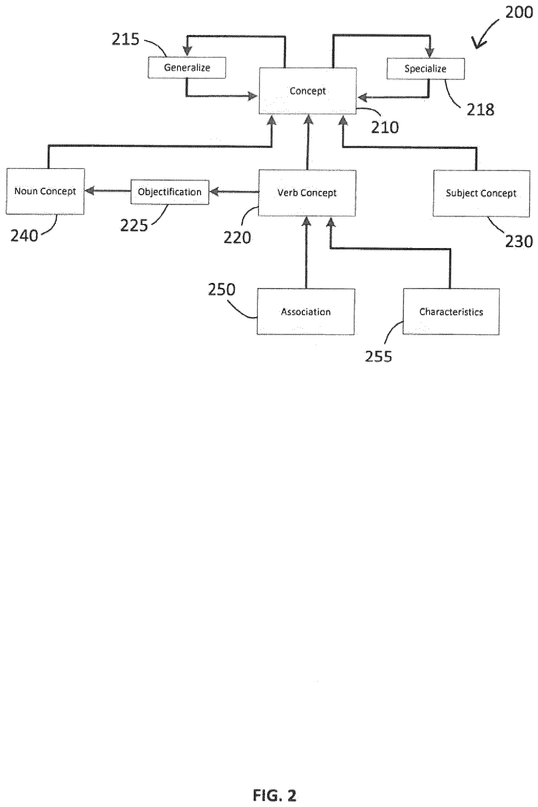

Different domains are already abstracted out into a single domain model. FIG. 2 represents an excerpt from Semantics of Business Vocabulary and Rules (SBVR), which represents a vocabulary to define the Concepts in any domain and relationships between them. In addition, FIG. 2 illustrates how different domains can be represented through one single abstract domain model - SBVR.

Specifically, FIG. 2 shows a system 200 of relationships between various types of concepts in accordance with an embodiment. In general, a concept 210 is associated with actions generalize 215 and specialize 218. Types of concepts include noun concept 240, verb concept 220, and subject concept 230. A verb concept 220 is related to noun concept 240 via objectification 225. Verb concept 220 is related to association 250, characteristics 255, etc.

In order to perform an automation in any of the domain, there is a need to develop an abstract automation mechanism which can work on the abstract concepts defined in an abstract domain model such as SBVR. Such an abstract automation mechanism can be applied to a wide variety of domains and thus perform multi-domain automation.

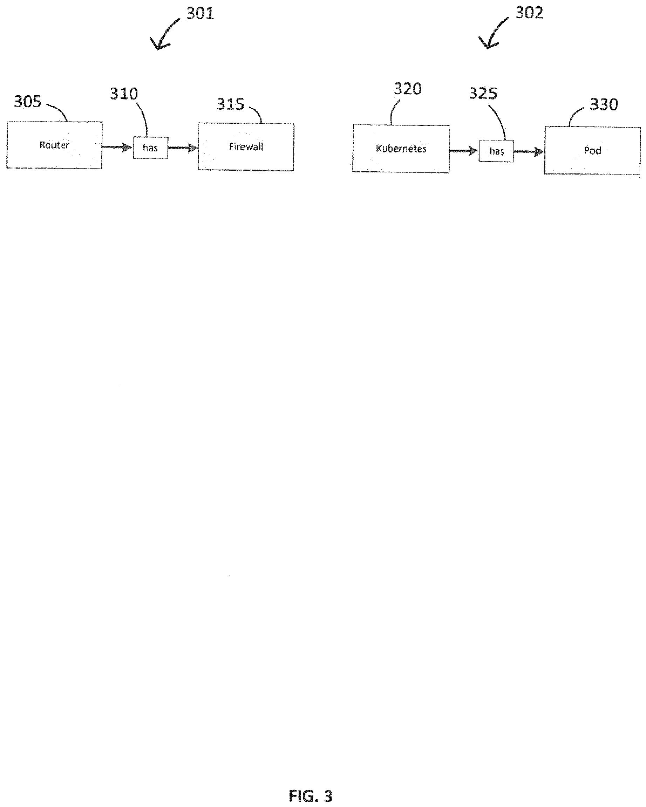

As an example, FIG. 3 illustrates two different business facts from two different domains. In addition, FIG. 3 shows that such business facts can be represented through one abstract domain model. In particular, FIG. 3 shows an example of the abstraction of a networking domain 301 and a cloud infrastructure domain 302. In the ND 301, a 'router' (305) and a 'firewall' (315) are the Noun Concepts in SBVR and the relationship 'has' (310) is the Verb Concept, forming a business fact 'a router has a firewall'. Similarly, in the CD 302, 'Kubernetes' (320) and a 'pod' (330) are the Noun Concepts in SBVR and the relationship 'has' (325) is the Verb Concept forming a business fact 'a Kubernetes has many pods'. This shows that two different business facts from different domains can be abstracted and represented in one single model.

**Abstract BPM Generation System**

An automation can be performed through a sequence of actions e.g., a BPM which is a sequence of processes. Given a list of processes, Reinforcement Learning can generate a (sequence of processes) BPM because RL can find a sequence of actions to achieve a goal (already discussed above).

However, conventionally, the RL mechanism needs to be coded in programming languages (Python, PHP, scala, etc. ) for different domains. OpenAI Gym presents several environments for several domain problems. For example, separate Environments may be coded in programming languages for CartPole-v1 and MountainCar-v0, and the Environments thus constructed cannot be used interchangeably or used in connection with any other domain.

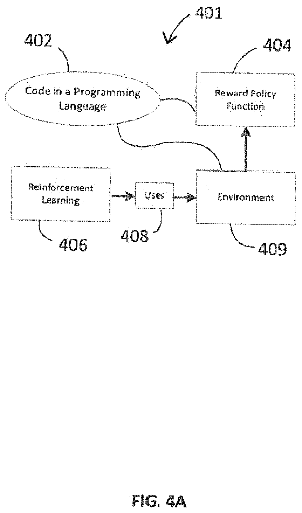

FIG. 4A shows conventional constituents of RL and which parts require programming language expertise. Specifically, a set of rules, i.e., an Environment 409, for a specific domain, are written in a programming language (402). The Environment 409 includes a set of rules and may use (408) Reinforcement Learning (406) to adapt the rules. The set of rules describe two things:

    (1) What action can be performed on a specific system's State, and

(2) When an action is performed, the action has to be rewarded or penalized.

In a conventional RL mechanism, a Reward Policy Function 404 and the Environment 409 must be coded in a programming language (402). This can only be achieved by a person who is an experienced programmer. Moreover, the person must have experience programming in the particular coding language needed for the particular task.

A need clearly exists for an abstract Environment model that is independent of any programming language and is domain-independent. Such an Environment can be used in multiple domain problems. Such an abstract Environment model offers multiple benefits - business users can use RL without the need for an experienced programmer, and an Environment model can be shared across multiple domains.

To develop such a domain independent Environment model, the inventors identified the domain-specific parts in a conventional RL mechanism. The inventors found that an Environment is the primary domain specific part. Consequently, the Reward Policy Function becomes domain specific as well because it is defined inside the Environment.

Further analysis determined that an Environment is merely a set of rules coded in a programming language.

Accordingly, in accordance with an embodiment, an improved Environment model that enables one to define a set of Environment rules on a substantial number of domains, without any coding in any programming language, is disclosed. Accordingly, a user who wishes to use RL to find BPM candidates does not need to depend on programming expertise. A user, from any domain, can define the rules for their own domain without the need of any programming or coding.

Assuming that any domain can be represented by the SBVR model (as shown in FIG. 2), an RL Environment and a Reward Policy Function may be defined in such an abstract way that using this abstract RL, Environment rules can be defined on any domain.

Thus, in accordance with an embodiment, a multi-domain abstract Environment model is provided. Advantageously, the multi-domain abstract Environment model enables any user to define the above two rules (1) and (2), without the need of any programming language experience. In particular, a set of rules may be defined and can be re-used in multiple domains.

In accordance with an embodiment, a multi-domain abstract Environment model contains two elements: (1) State Action graph and (2) Reward policy function. The State Action graph is, effectively, the State Transition diagram which contains a 'State' and a 'Transition'.

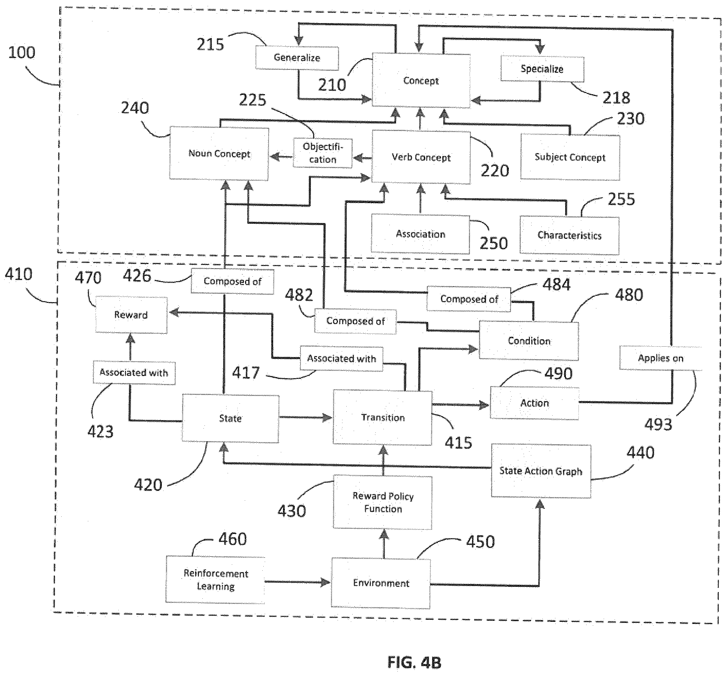

FIG. 4B shows a representation of a multi-domain abstract Reinforcement Learning model and its constituents as well as how these constituents are associated with an existing abstract domain model (i.e., SBVR) in accordance with an embodiment. An upper portion of FIG. 4B shows an excerpt of the SBVR abstract domain 100 previously discussed and shown in FIG. 2. A lower portion of FIG. 4B includes elements of a multi-domain abstract Reinforcement Learning model 410 and how it interacts with the elements of system 100. Specifically, system 410 shows relationships between various elements including a State 420, a Transition 415, an Environment 450, and a Reinforcement Learning mechanism 460. Thus, for example, a State 520 is composed of (426) a list of Noun Concepts (240) and its characteristics. For example, the Noun Concepts could be 'Cisco Device' and 'Firewall'. When such a Noun Concept is associated with its characteristic 'exists', it will become 'Cisco Device' 'exists'. Noun Concepts with their characteristics / associations are considered as States in our State Action graph. Thus, 'Cisco Device' 'exists' is a State.

Referring again to FIG. 4B, a State 420 is associated with (423) a Reward 470. A Transition 415 is associated with (417) a Reward 470. A Transition 415 may have at least one Condition 480. A Condition 480 is composed of (482) a Noun Concept 240 and is composed of (484) a Verb Concept 220. A Transition also is associated with an Action 490, which applies on (493) a Concept 210. A State Action Graph 440 includes at least one State 420. An Environment 450 includes a set of rules; the Environment includes a Reward Policy Function 430 which defines a reward value for each State-Transition pair 415. The Environment 450 uses a Reinforcement Learning mechanism 460 to adapt and improve the set of rules.

Advantageously, in accordance with an embodiment, in order to define the States in an Environment, a user does not need to be a programming expert because the user can easily identify each Noun Concept in a domain and the related characteristics and associations. Also, a defined Noun Concept can be used in multiple domains for example, a 5G use case may involve a 'Cisco Device' as well as a cloud infrastructure use case may also involve a 'Cisco Device'. Thus, the act of defining a State in the State Action Graph requires no programming expertise and can be re-used across multiple domains.

A Transition 415 effectively represents an executable action e.g., a process, a REST API, etc. In one embodiment, a list of processes is provided for inclusion in a Transition. A user can select a process from a list and create a Transition. In addition, a user can specify the Conditions under which the action will be executed. Advantageously, a user does not need to use a programming language to define an Environment but instead may define Environment rules by creating Transitions via one or more graphical user interfaces (GUIs).

A Condition 480 may be defined as an expression which includes Noun Concepts and Verb Concepts. For example 'Cisco Device' 'has' 'Firewall'. Here, 'Cisco Device' and 'Firewall' are Noun Concepts which are associated through a Verb Concept 'has'. Such expressions are evaluated through our Expression Engine to assess if the Condition evaluated to True or False. When it is True, the Transition happens, otherwise the Transition does not happen. A non-expert user can define such Conditions and select Actions to form a Transition without any programming experience required. However, the user should preferably be a subject matter expert of the domain so that correct Conditions are created and correct Actions are selected. Moreover, such created Transitions can be used in use cases from different domains. For example, a Transition composed of Condition 'Cisco Device' 'has' 'Firewall' and Action 'Create Firewall' can be used in a Home Automation use case, a cloud infrastructure use case, a 5G use case, etc. Thus, the act of generating the State Action Graph does not require any programming expertise, and the State Action Graph can be re-used across multiple domains.

In accordance with an embodiment, in order to identify which actions can be performed on a specific system's State, an Artificial Intelligence (AI) engine identifies all the outgoing Transitions. For each outgoing Transition, the Condition is evaluated. If the outgoing Transition's condition is evaluated to True, the corresponding Action can be performed on that specific State, and the system Transitions to the next State. There is a possibility that on a specific State, there are multiple eligible Transitions. In such a case, the AI engine explores to find the best Transition. During exploration, the AI engine makes each Transition and learns about which Transition provides the best reward. Once, the exploration is done, the Transition with the highest reward is selected as the Transition to the next State. Transitions that occur during the exploration phase do not have any impact of the system State.

**Reward Policy Function**

Rewarding or penalizing an action is governed by a Reward Policy Function. In conventional RL systems, the reward policy function is coded in a programming language, which limits its usability by non-expert users.

In accordance with an embodiment, a Reward Policy Function may be generated by a user having no programming experience. A State and a Transition are associated with a Reward Value. Accordingly, whenever an action is performed, effectively when a Transition occurs, on a State, the associated Reward value is awarded. Advantageously, in contrast to existing conventional systems (in which rewards must be defined using a programming language), the systems and methods described herein allow rewards to be visually on a State-Transition pair; guard conditions are also represented visually on Transitions as pre-conditions.

Using this reward value, the AI engine identifies if the performed action was rewarded or penalized. For example, suppose that on a State S, Transitions T1 and T2 may be performed, the Reward value for (S, T1) is 1000, and for (S, T2) is 100. Using this information, the AI engine can identify that T1 is the preferred transition on state S. The AI engine stores this information in memory to avoid actions which were penalized previously. Overall, the reward policy function is defined as follows:

$$\text{Reward} = \text{function (State, Transition)}$$

To make this Reward Policy Function easy for non-technical users and to keep it domain-independent, a mechanism updates these values dynamically through various sources of information. Firstly, all the rewards are defined as zero. Then, a log analysis mechanism reads current system logs, identifies sequences between specific actions from log analysis and updates the rewards values. Subsequently, when a user generates a BPM, the user may accept the generated BPM or can reject it. If the user accepts the generated BPM, the involved State and Transitions reward values are increased. However, if the user rejects the generated BPM, the involved State and Transitions reward values are left unchanged or are decreased. Advantageously, this logic discourages the re-generation of the rejected BPM. In addition, the system enables the user to specify a specific reward value for a pair of State and Transition. Using these inputs, the rewards for all possible States and Transition pairs are maintained. Thus, a multi-domain Reward Policy Function may be created without requiring the user to have any programming experience.

As stated above, in existing conventional systems, an Environment is a complex, domain dependent input for RL that needs to be coded by a programming expert. In contrast, in accordance with an embodiment, an abstract multi-domain Environment model enables non-expert users to define an Environment easily without any programming experience.

**Communication System**

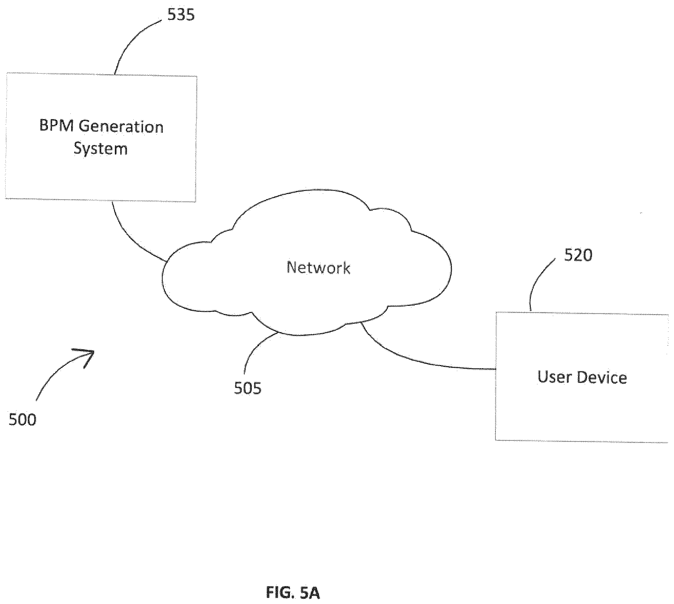

In accordance with an embodiment, an abstract multi-domain Reinforcement Learning model resides and operates on a BPM generation system operating within a communication system. FIG. 5A shows a communication system in accordance with an embodiment. Communication system 500 includes a network 505, a Business Process Model (BPM) generation system 535, and a user device 520.

Network 505 may include the Internet, a local-area network, a wide area network, a wireless network, an Ethernet, a Fibre channel network, or any other type of network.

BPM generation system 535 may include a processing device and one or more software applications residing and operating on the processing device. BPM generation system 535 is linked to network 505.

User device 520 may include any type of processing device, such as a personal computer, a laptop device, a cell phone, a server computer, etc. User device 520 is linked to network 505.

From time to time, BPM generation system 535 receives from user device 520 one or more inputs and, based on the inputs, generates one or more BPM candidates. BPM generation system 535 provides the BPM candidates to user device 520 and may receive a selection of one of the BPM candidates.

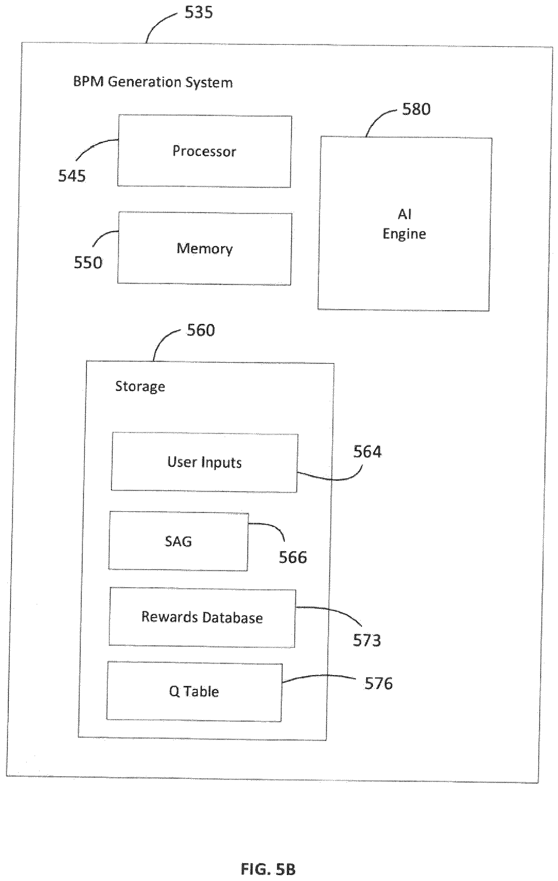

FIG. 5B shows components of BPM generation system 535 in accordance with an embodiment. BPM generation system 535 includes a processor 545, a memory 550, a storage 560, and an artificial intelligence (AI) engine 580.

Processor 545 controls the operation of various components of BPM generation system 535. Memory 550 is adapted to store data. Storage 560 is adapted to store data.

AI engine 580 is a machine learning algorithm that is trained to identify, classify, infer, and/or predict a business process model (BPM) that best achieves a user's intent (as specified by the user inputs). Any suitable machine learning training technique may be used, including, but not limited to, a neural net based algorithm, such as Artificial Neural Network, Deep Learning; a robust linear regression algorithm, such as Random Sample Consensus, Huber Regression, or Theil-Sen Estimator; a kernel based approach like a Support Vector Machine and Kernel Ridge Regression; a tree-based algorithm, such as Classification and Regression Tree, Random Forest, Extra Tree, Gradient Boost Machine, or Alternating Model Tree; Naïve Bayes Classifier; and others suitable machine learning algorithms.

In one embodiment, AI engine uses Reinforcement Learning methods. Reinforcement Learning is a well-known area of machine learning.

Accordingly, AI engine 580 may from time to time receive one or more user inputs, generate a State Action Graph (SAG) based on the user inputs, identify a plurality of BPM candidates based on the SAG, determine reward values for the BPM candidates, and select a final BPM from among the generated BPM candidates based on the highest reward values. AI engine 580 may present the final BPM to the user and receive additional user input. AI engine 580 may select a different final BPM based on the additional user input.

Processor 545 and/or the AI engine 580 may from time to time store data in storage 560, including, for example, user inputs 564, a State Action Graph (SAG) 566, a rewards database 573 containing information related to rewards, and a Q Table 576.

**Method of Automatically Generating Business Process Model (BPM)**

In accordance with an embodiment, a computer-implemented method is provided. Information defining an initial state, a final state, a plurality of states and a plurality of transitions is received from a user. A plurality of paths between the initial state and the final state is defined, wherein each path traverses at least one state and at least one transition. A cumulative reward value is determined for each path in the plurality of paths. A path having a highest cumulative reward value is selected as a business process model. The business process model is presented to the user.

In one embodiment, a method of automatically generating a BPM includes the following three steps:

1. Creation of State Action Graph (SAG) - Showing States and Transitions.
2. User Inputs - User specify its intent and other inputs to generate a BPM.
3. Execution of Reinforcement Learning - Using user inputs to find the relevant paths from the SAG to satisfy the user's intent.

The user provides input that reflects the user's intent. One or more candidate BPMs are automatically generated based on the SAG. The best candidate BPM is presented to the user, and the user may accept or reject the BPM.

In accordance with an embodiment, after a user accepts or rejects a proposed BPM, a machine learning model adjusts the reward values associated with the States and Transitions in the BPM based on the user's acceptance or rejection. Adjusting the reward values based on a user's actions increases the probability of generating desirable BPMs in the future. In this manner, the machine learning model continually improves its performance.

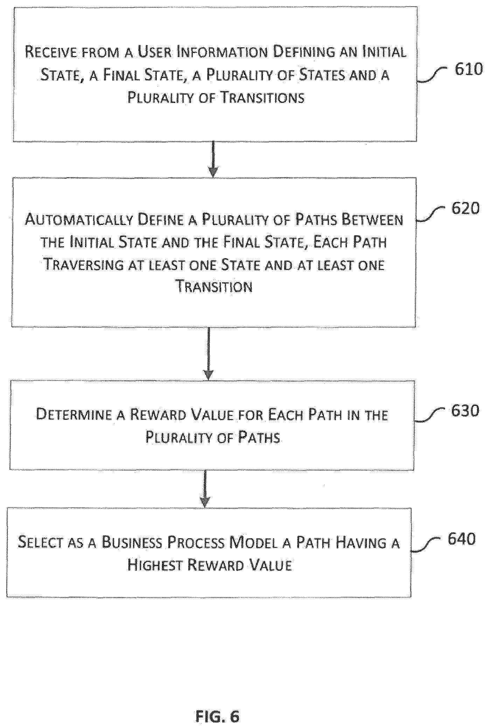

FIG. 6 is a flowchart of a method in accordance with an embodiment. At step 610, information defining an Initial State, a Final State, a plurality of States and a plurality of Transitions. At step 620, a plurality of paths between the Initial State and the Final State is automatically defined, wherein each path traverses at least one State and at least one Transition. At step 630, a cumulative reward value for each path in the plurality of paths is determined. At step 640, a path having a highest cumulative reward value is selected as a business process model.

In another embodiment, user information defining at least a plurality of states, a plurality of transitions, an initial state, and a final state is received, a plurality of paths between the initial state and the final state are automatically defined, where each path traverses at least one state and at least one transition, a Q-value is determined for each state-transition pair in the plurality of paths, and a path having a highest Q-value is selected as a BPM.

In an illustrative embodiment, a user has a need to move a containerized application from one cloud to another. In existing conventional systems, movement of such an app requires the participation of Subject Matter Experts (SMEs) from different domains, e.g., the cloud domain (people having specific knowledge of how to run and host containers), the networking domain (people having specific knowledge about how to publish and secure applications on internet), etc. As described in the illustrative embodiment, a non-technical user can generate a BPM to move a containerized application without the need/involvement of specialized technical people from different domains such as the cloud domain or networking domain.

While the illustrative embodiment describes one scenario pertaining to one possible implementation of systems and methods described herein, it is not intended to be limiting. Systems and methods described herein may be implemented in other scenarios to achieve other goals.

## Creation of State Action Graph (SAG)

In the illustrative embodiment, the user wishes to generate a BPM to move a containerized application from one cloud to another cloud. In order to generate such a BPM, the corresponding States and Transitions must be specified in a State Action Graph (SAG). In existing conventional systems, such States and Transitions are created by a technical team, and the user may use them to generate the BPM. However, in the illustrative embodiment, the user, who is not a programming expert, wishes to create the States and Transitions, and the SAG, by himself or herself, and further wishes to use the SAG to generate the intended BPM.

Accordingly, in the illustrative embodiment, in order to move a containerized application from one cloud to another cloud, the user defines a set of States and a set of Transitions as shown in Table 1, and creates a SAG to include the plurality of States and Transitions.

**Table 1**

| States | Transitions |
|---|---|
| K8s MEs exists | LAUNCH MOVE K8S APP - RETRIEVE NETWORK PARAMETERS |
| NETWORK PARAMTERS RETRIEVED FOR K8S | K8S CONSTRUCT PROBATION |
| K8S NETWORK PROBATION DONE | K8S CREATE NAMESPACES |
| K8S NAMESPACES CREATED | DEPLOYED K8S PODS |
| K8S PODS DEPLOYED | ANALYZE K8S PODS PERFORMANCE |
| K8S PODS PERFORMANCE ANALYSED | DEPLOYE APP WITH AVERAGE LATENCY K8S |
| APP DEPLOYED ON NEW K8S | DEPLOY APP WITH ULTRA LOW LATENCY K8S |
| Deployed App exposed to public | DEPLOY APP WITH HIGH QUALITY K8S |
| | Expose Deployed App to the public |

### Creation of States

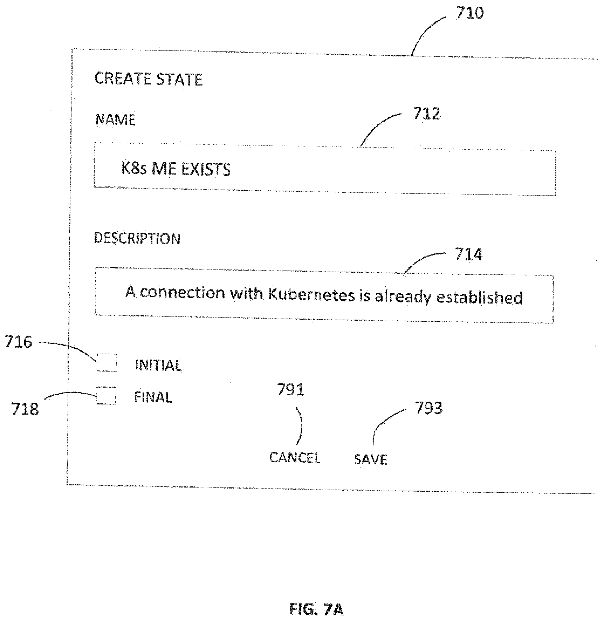

In accordance with an embodiment, BPM generation system 535 provides a series of graphical user interfaces (GUIs) that enable a user to define States and Transitions. FIG. 7A shows a GUI that enables a user to define a State in accordance with an embodiment. GUI 710 includes a name field 712 and a description field 714. GUI 710 also includes boxes 716, 718 that a user may use to indicate that the State is the Initial State or Final State respectively. GUI 710 also includes a cancel button 791 and a save button 793. The user may employ GUI 710 to create several States.

In the illustrative embodiment, the user creates the State "K8s MEs EXISTS." The user defines the 'Name' of the state and a 'Description' that describes what the State represents.

### Creation of Transitions

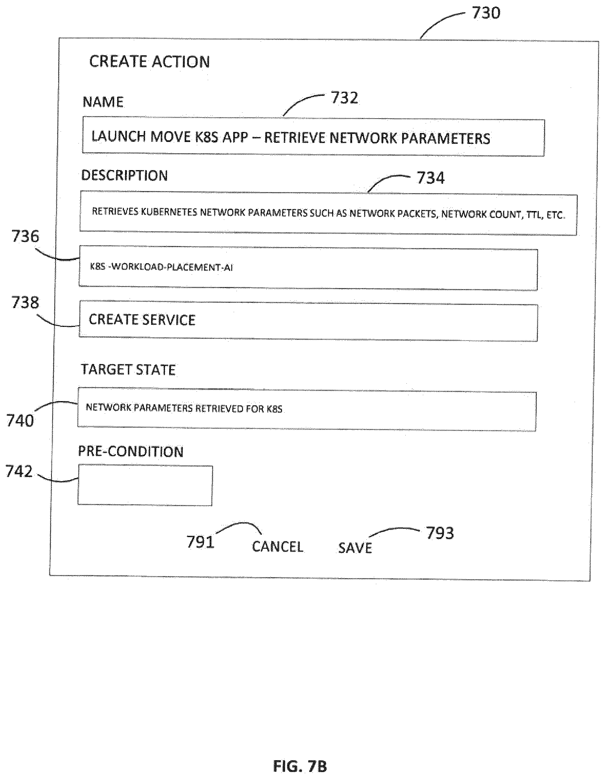

In accordance with an embodiment, after the user has created a plurality of States, the user defines a plurality of Transitions. BPM generation system 535 provides a series of GUIs to enable a user to define Transitions. In the illustrative embodiment, a GUI may use the term "action" to represent a Transition. Thus, for example, FIG. 7B shows a "CREATE ACTION" GUI that enables a user to define an action associated with a Transition in accordance with an embodiment. GUI 730 includes a name field 732, description fields 734, 736, and 738, a Target State field 740, and a pre-condition field 742. The name field specifies the name of the Transition. The description information describes the action(s) associated with the Transition. For description information, the user selects a process and its task (a real executable process which will execute on a system e.g., a REST API). GUI 730 also includes cancel button 791 and save button 793. Any pre-conditions may be entered in field 742.

In the illustrative embodiment, the user enters the name of a Transition, "LAUNCH MOVE K8S APP - RETRIEVE NETWORK PARAMETERS." In the description field 734, the user enters "RETRIEVES KUBERNETES NETWORK PARAMETERS SUCH AS NETWORK PACKETS, NETWORK COUNT, TTL, ETC." In field 736, the user selects the K8s-workload-placement-ai process. This selected process has several tasks, one of which needs to be selected by the user. For example, the CREATE SERVICE task is selected in field 738; this task will retrieve all network parameters (e.g., latency, TTL, hostname) from Kubernetes that may be used later.

In Target State field 740, the user specifies the Target State of the Transition. Specifically, the user has selected the Target State as "NETWORK PARAMETERS RETRIEVED FOR K8S." This indicates that when this Transition occurs, the system will reach the mentioned Target State where the system has all the required network parameters from a Kubernetes system.

## Pre-Conditions and Post-Conditions

Some Transitions require a condition check to ensure that the Transition occurs only when a specified condition is met. Accordingly, some Transitions include a pre-condition. A pre-condition specifies at least one variable and a value for the variable. The Transition occurs only if the variable has the specified value.

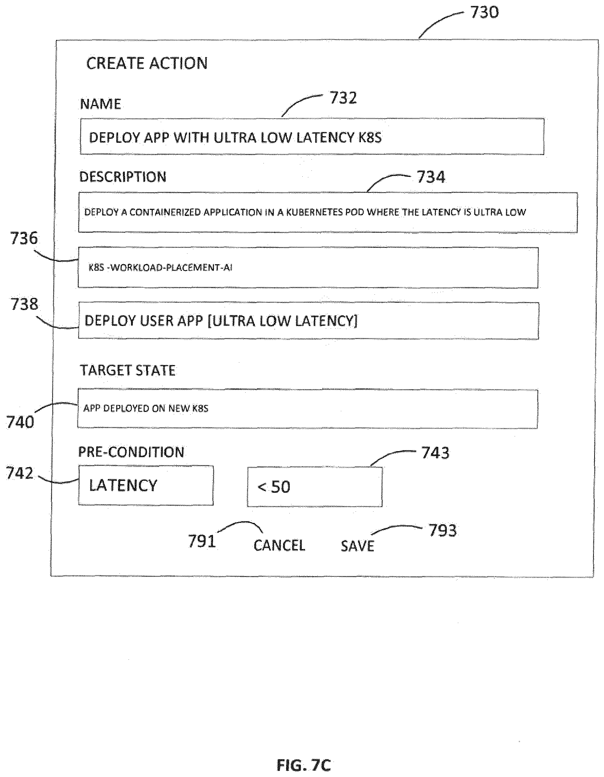

The user defines an action named "DEPLOY APP WITH ULTRA LOW LATENCY K8S" and adds the description "DEPLOY A CONTAINERIZED APPLICATION IN A KUBERNETES POD WHERE THE LATENCY IS ULTRA LOW." Suppose, for example, that the user intends that the Transition "DEPLOY APP WITH ULTRA LOW LATENCY K8S" occurs only when the target Kubernetes has ultra-low latency. FIG. 7C illustrates use of the GUI of FIG. 7B to define such a condition in accordance with an embodiment. In pre-condition fields 742, the user specifies LATENCY, and in pre-condition field 743, the user specifies "< 50". In this manner, the user specifies that the Transition can occur only when the latency in the Kubernetes pod is less than 50 milliseconds. Such a condition may be used, for example, to filter the Transitions on a State. The user also provides information in fields 736, 738, and 740.

A Transition may also include a post-condition. A post-condition specifies at least one variable and a value for the variable. After the Transition occurs, the context information is updated to include the post-condition variable, and the value of the variable is set to be equal to the specified value.

## States and Transitions Connections

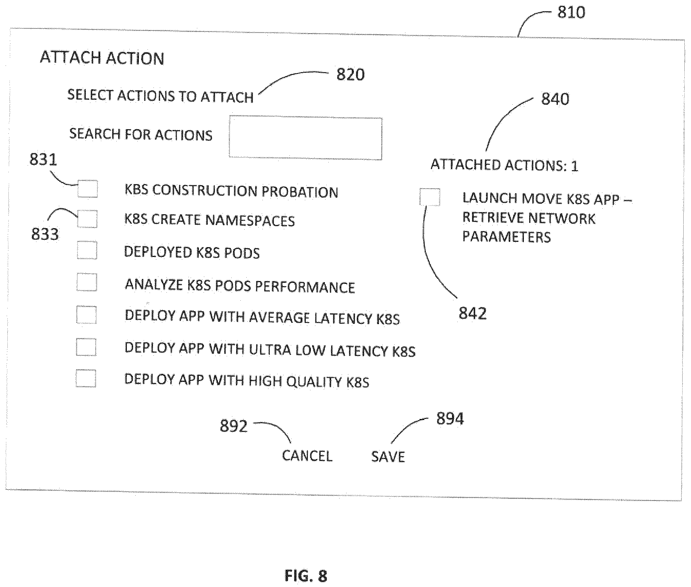

After all Transitions are defined, the user defines the outgoing Transitions for each State. In accordance with an embodiment, BPM generation system 535 presents a GUI that includes a list of Transitions; the user may select one or more Transitions from the list and attach them to the State as outgoing Transitions. FIG. 8 shows an "ATTACH ACTION" GUI 810 that enables a user to select one or more outgoing Transitions associated with a particular State. In the illustrative embodiment, the user accesses GUI 810 to select Transitions to be outgoing Transitions associated with the State "K8S MEs EXISTS." Thus, GUI 810 has a left-side portion that includes a label "SELECT ACTIONS TO ATTACH" (820) and a list of actions including actions 831 and 833. GUI 810 also includes a right-side portion that includes a label "ATTACHED ACTIONS" and a list of actions that have been attached to a particular State as outgoing Transitions. When the user selects an action listed in the left-side portion, the selected action appears on the right side as an attached action. In the illustrative embodiment, the user selects action 842 ("LAUNCH MOVE K8S APP - RETRIEVE NETWORK PARAMETERS") as an outgoing Transition. GUI 810 also includes a cancel button 892 and a save button 894.

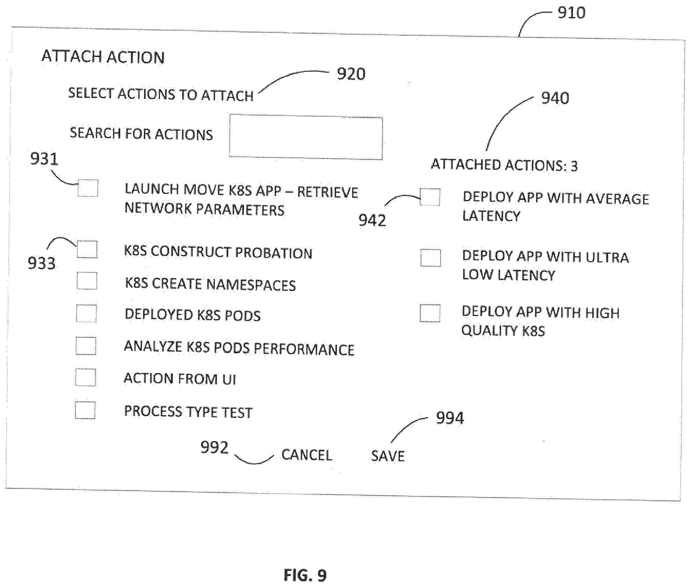

A State can have multiple outgoing Transitions. FIG. 9 shows an ATTACH ACTION GUI 910 employed by a user to select multiple outgoing Transitions for the State "K8S PODS PERFORMANCE ANALYSED" in accordance with an embodiment. GUI 910 has a left-side portion that includes a label "SELECT ACTIONS TO ATTACH" (920) and a list of actions including actions 931 and 933. GUI 810 also includes a right-side portion that includes a label "ATTACHED ACTIONS" and a list of actions that have been attached to a particular State as outgoing Transitions. In the illustrative embodiment, the user selects three (3) actions including action 942 ("DEPLOY APP WITH AVERAGE LATENCY") as outgoing Transitions. GUI 910 also includes a cancel button 992 and a save button 994. Thus, from the State "K8S PODS PERFORMANCE ANALYSED"," any one of the three Transitions can occur.

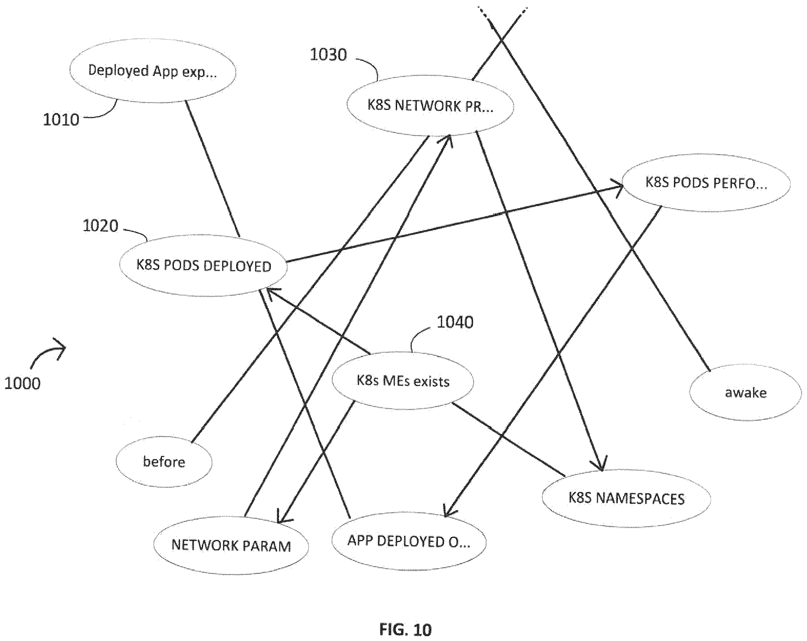

After all the States, Transitions, and outgoing Transitions have been created and defined, the State Action Graph (SAG) is complete. FIG. 10 shows a portion of a SAG in accordance with an embodiment. SAG 1000 includes a plurality of States including States 1010, 1020, 1030, and 1040. In the Figure, arrows represent transitions from a first State to a Second State. For example, arrow 1082 represents a Transition from State 1050 to State 1010.

In accordance with an embodiment, after a SAG is complete, the user provides a set of additional inputs and generates a BPM. If a BPM is generated that does not reflect the user's intent, the user may reject the BPM, change the inputs and generate another BPM.

## Additional User Inputs

In the illustrative embodiment, a user provides additional input parameters in order to generate a BPM. Specifically, the user provides the following inputs:

- Final State - represents the user's intent
- Initial State - the initial state from where the user wants to find a path to the Final State
- Learning Rate - how quickly the Reinforcement Learning algorithm should learn
- Discount Factor - how much an action's reward affected from other actions
- Final State Reward - The reward value when the final state is achieved
- Possible Transitions - When user wants a specific transition to be included in the generated BPM, the user can provide those transitions here.
- Initial Context - a set of variables and their initial values which are used by the Reinforcement Learning algorithm to evaluate the conditions.

BPM generation system 535 provides a series of GUIs that enable a user to provide this additional information. In one embodiment, if the user does not specify a particular parameter, BPM generation system 535 may set the parameter's value equal to a predetermined default value.

### Final State

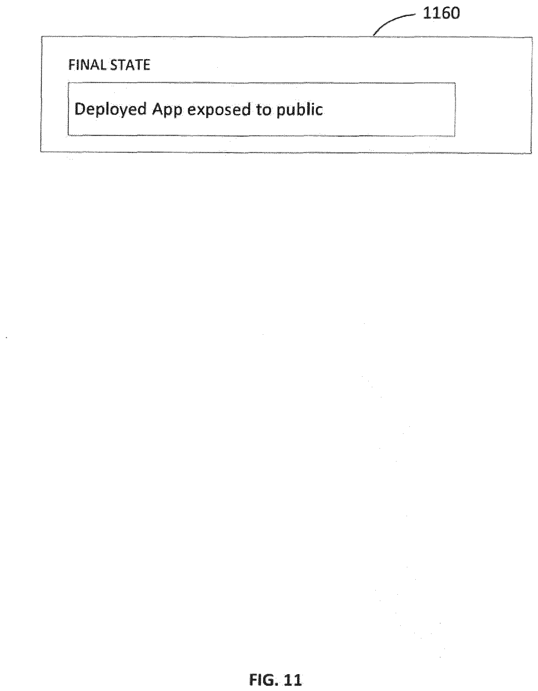

In accordance with an embodiment, a user specifies an intent by selecting a Final State. In the illustrative embodiment, FIG. 11 shows a GUI 1160 that enables a user to define a Final State in accordance with an embodiment. Because the user's intent is to move a containerized app from one cloud to another cloud and make it available to all existing clients, the user selects as the Final State "DEPLOYED APP EXPOSED TO THE PUBLIC." By specifying this Final State, the user indicates an intent to generate a BPM can move and deploy an app to a new cloud and expose it to the public.

### Learning Rate

AI Engine 580 improves its decision making by learning from mistakes made and learning to makes better decisions. In accordance with an embodiment, the user may choose the learning rate of the model. In the illustrative embodiment, the learning rate may be set to a value between 0 and 1. When the learning rate is 0, the model does not learn anything from its mistakes and previous history. When the value is 1, the model attempts to learn very quickly from previous mistakes and history.

Implications of 0 learning rate: When the learning rate is set equal to 0, the model will not learn anything from previous mistakes and history. Accordingly, every time a new BPM is generated, the mode will start from scratch and may give produce a BPM that does not correspond to the user's specified intent. In addition, the model may take a lot of time as it has to assess all possible combination of actions.

Implications of 1 learning rate: When the learning rate is set equal to 1, the model attempts to learn very quickly in order to speed up the process of BPM generation. In such a case, the model may miss some of the crucial history. Accordingly, there is a chance that the generated BPM does not correspond to the user's intent.

Implications of learning rate between 0-1: Each user must determine the most suitable learning rate at which the user obtains the best possible outcome in a minimal amount of time. If the user obtains a very good result but the process is taking a very long time, the user may attempt to increase the learning rate so that the model learns quickly and provides the desired results quickly. On the other hand, if the model is producing results quickly but the results are not good, the user may attempt to reduce the learning rate so that the model takes sufficient time to learn and produce good results.

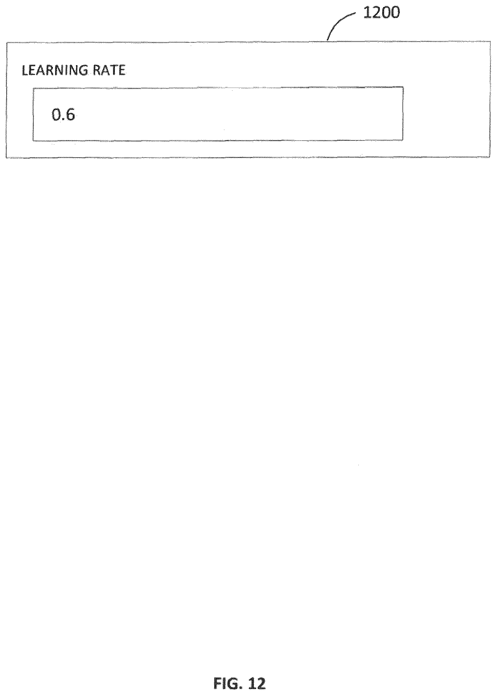

FIG. 12 shows a GUI 1200 that allows a user to select the learning rate in accordance with an embodiment. The user specifies a learning rate of 0.6.

### Discount Factor

In accordance with an embodiment, the user may define a discount factor.

Several combinations of actions are attempted and analyzed to achieve the best result. For each combination of actions, BPM generation system 535 tries one action after another and keeps a cumulative sum of rewards received from all the actions in the combination. For example, suppose the following combination of actions is examined: Action 1 → Action 2 → Action 3

Suppose that Action 1 gives a reward of 100, Action 2 gives a reward of 100 and Action 3 gives a reward of 100. If the discount factor is 0.2, then the actual reward of Action 3 is 100 * (1-0.2) = 80. Action 2 receives a reward of 80 * (1-0.2) = 64 and Action 1 receives a reward of 64 * (1-0.2) = 51.2.

If the discount factor is 0, BPM generation system 535 become short-sighted and only learns from the current action only. In the above example, the reward for Action 2 will always be 100 irrespective of the next action taken. This may lead to undesirable results as Action 2 seems to be good irrespective of any context.

If the discount factor is 1, the system strives to learn from the full combination. This might also lead to undesirable results as the overall cumulative reward for the full combination may be low, and the system may discard this combination even though the combination might have some good and desirable actions.

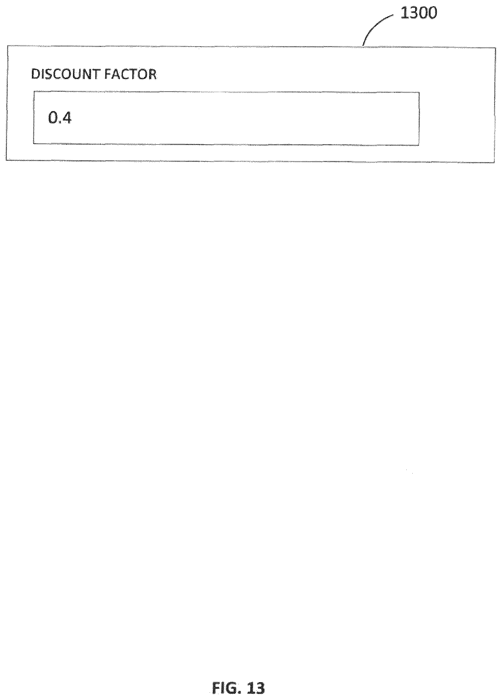

FIG. 13 shows GUI 1300 that a user may use to select a discount factor in accordance with an embodiment. In the illustrative embodiment, the user specifies a discount factor of 0.4.

**Final State Reward**

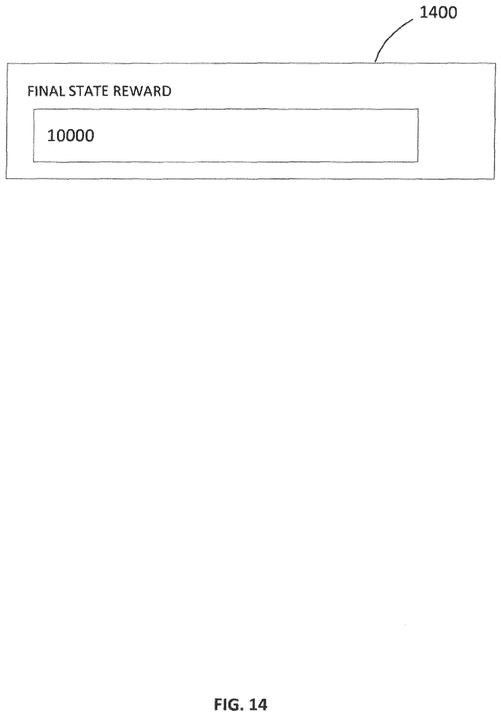

In accordance with an embodiment, the user may define a Final State Reward, which is a value that helps BPM generation system 535 to eliminate paths that cannot reach the desired Final State. Fig. 14 shows a GUI 1400 that a user may use to select the Final State Reward value in accordance with an embodiment. The value of the Final State Reward may be any number. In the illustrative embodiment, the user specifies a Final State Reward value of 10,000.

**Relevant Transitions**

In accordance with an embodiment, the user may specify one or more Transitions that the user desires in the final BPM. BPM Generation system 535, in response to the user input, becomes biased towards these Transitions and prioritizes outcomes that include the specified Transitions. However, BPM generation system 535 may generate a final BPM that does not include these Transitions.

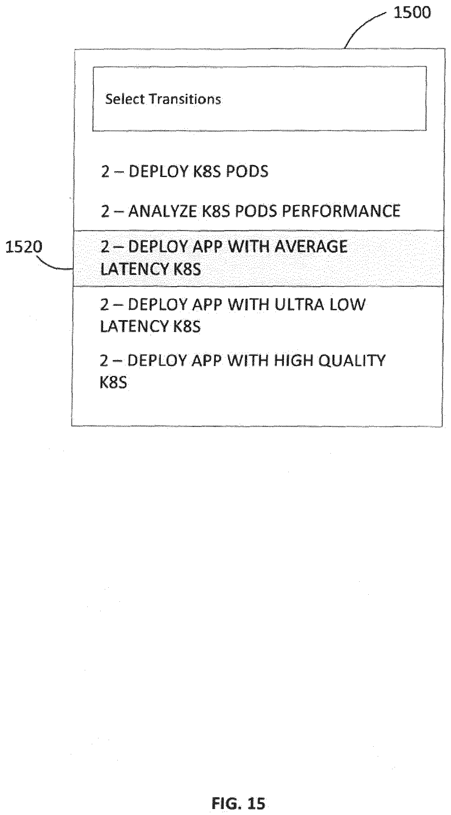

FIG. 15 shows a GUI that enables a user to select one or more relevant transitions that the user desires in the final BPM in accordance with an embodiment. GUI 1500 includes a list of actions, such as action 1520, that may be selected.

**Initial Context**

In accordance with an embodiment, a user may specify the Initial Context defining the initial conditions of a system. The Initial Context may include a set of variables and their values. The Initial Context may help BPM generation system 535 to find optimal results by initially eliminating one or more un-intended Transitions that do not satisfy the conditions, evaluated using the data from the initial Context.

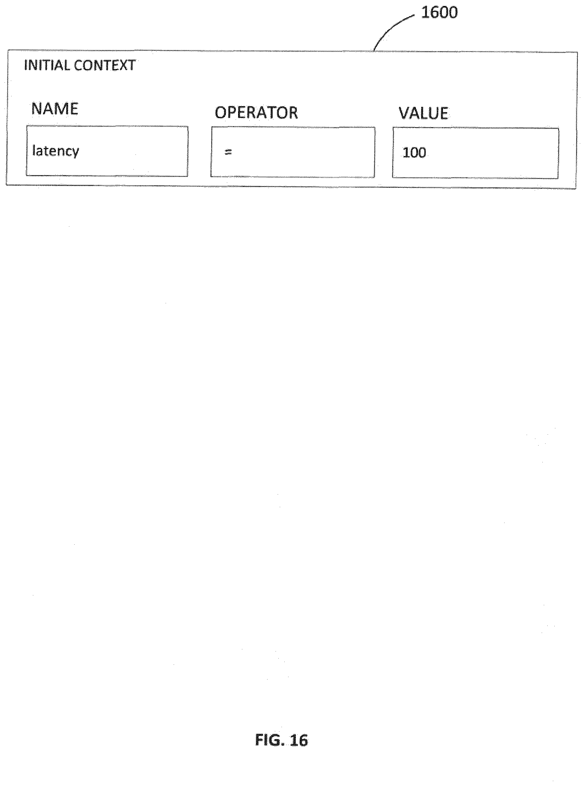

FIG. 16 shows a GUI that enables a user to specify an Initial Context in accordance with an embodiment. GUI 1600 allows the user to specify a name, an operator, and a value. In the illustrative embodiment, the user specifies that "latency = 100."

**Global List of Context Variables**

In accordance with an embodiment, BPM generation system 535 compiles and maintains a global list of variables and their values referred to as "context variables." These context variables include, for example, the Initial Context variables selected by the user. Pre-condition and post-condition variables defined by the user are also added to the global list of context variables. Context variables may include other variables.

Context variables may be used, for example, to determine whether a particular Transition may occur. Any pre-conditions associated with a particular Transition is evaluated as follows: pre-condition variables' values are identified from the Global list of variables, then the value is compared against the value mentioned in the pre-condition. The pre-condition expression has the form "identified value" - operator - "given value." This expression is evaluated. When the expression is evaluated to true, the Transition occurs, otherwise the Transition does not occur. It should be noted that when the variable used in the pre-condition does not exist in the Global list of variables, the pre-condition is assumed to be true.

**Determining Initial States**

In accordance with an embodiment, a user may specify an Initial State. In one embodiment, BPM generation system 535 identifies a plurality of possible Initial States based on the user-specified Final State. BPM generation system 535 presents to the user a list of possible Initial States, and the user may select an Initial State from among those presented.

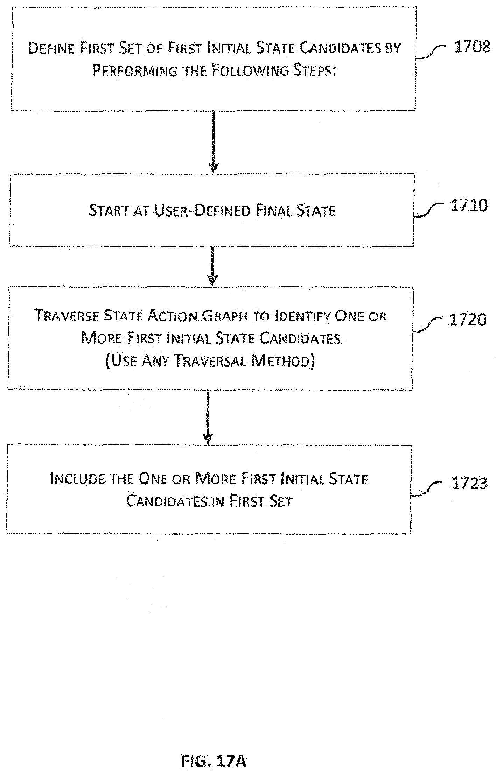

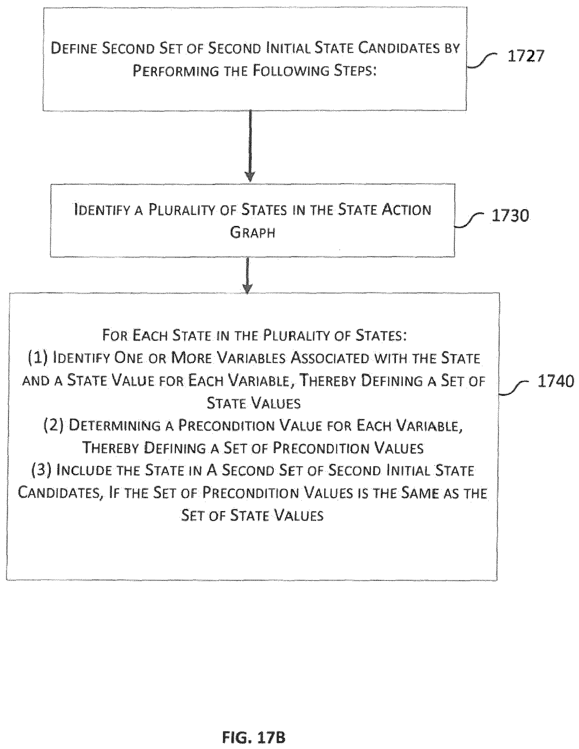

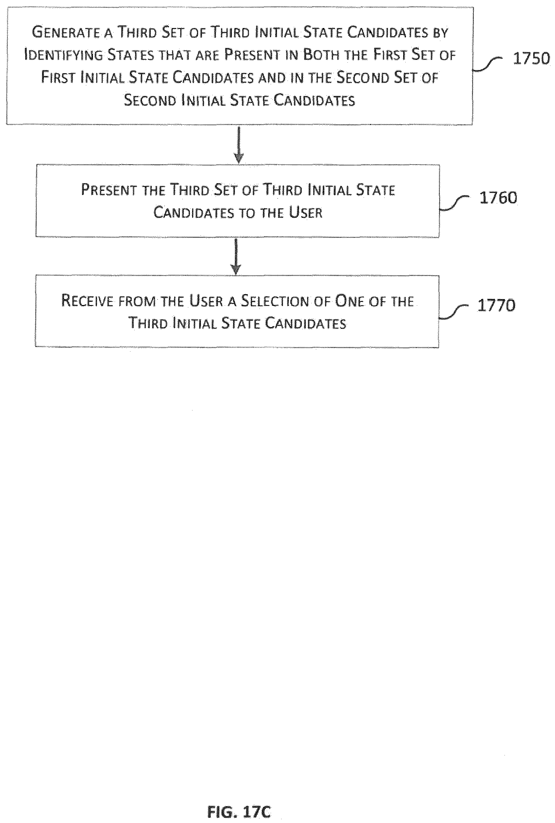

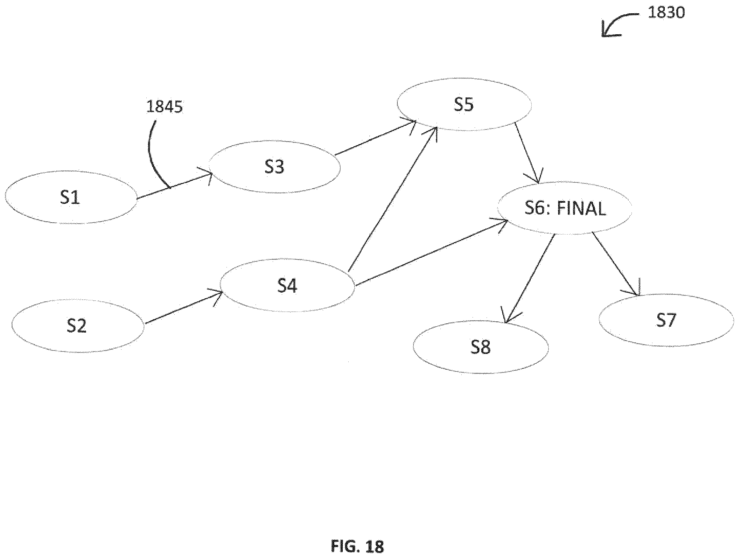

Based on the user-specified Final State, BPM Generation system 535 identifies one or more Initial States. FIGS. 17A-17C include a flowchart of a method of identifying one or more Initial States in accordance with an embodiment. FIGS. 17A-17C are discussed with reference to FIG. 18. FIG. 18 shows an exemplary SAG in accordance with an embodiment. SAG 1830 includes a plurality of States including States S1, S2, S3, S4, S5, S6, S7, and S8. SAG 1830 also includes a plurality of Transitions such as Transition 1845 between S1 and S3. As indicated in Figure 18, the user has specified State S6 as the Final State.

Referring to block 1708, a first set of first Initial State candidates is defined by performing the following steps:

At step 1710, the process starts at the user-defined Final State. Thus, the process starts at State S6.

At step 1720, the State Action Graph is traversed to identify a first set of first Initial State candidates. BPM Generation system 535 may use any traversal method to traverse the SAG to identify first Initial State candidates. For example, a breadth first search (BFS) traversal algorithm or a depth first search (DFS) traversal algorithm may be used. Other methods may be used. In the example, suppose that a traversal method is used and identifies as Initial State candidates States S1, S2, S3, S4, and S5.

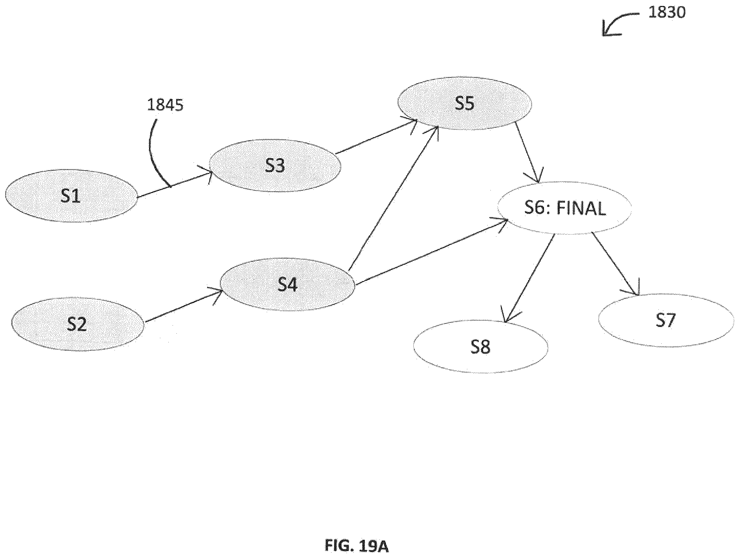

At step 1723, the first Initial State candidates are included in the first set. Thus, BPM Generation system 535 defines a first set of first Initial State candidates to include States S1, S2, S3, S4, and S5. FIG. 19A shows SAG 1830 with the States of the first set of initial state candidates indicated by shading.

Referring to block 1727, a second set of second Initial State candidates is defined by performing the following steps:

At step 1730, a plurality of States in the State Action Graph is identified. Referring to exemplary SAG 1830 of FIG. 18, suppose that a plurality of States including all States except the Final State S6 is defined. Thus, BPM Generation system 535 defines a plurality of States that includes States S1, S2, S3, S4, S5, S7, and S8.

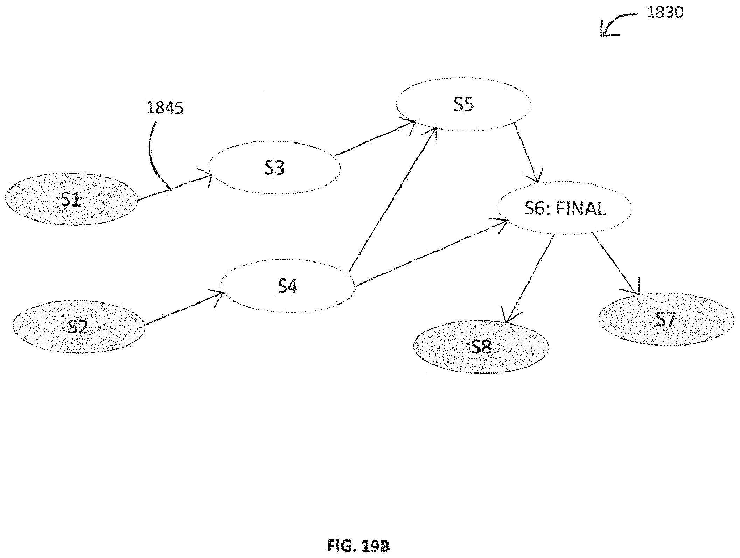

At step 1740, for each State in the plurality of States, a series of actions are performed. One or more variables associated with the State, and a state value for each variable, are identified, thereby defining a set of state variables. A precondition value is determined for each variable, thereby defining a set of precondition values. The State is included in the second set of second Initial State candidates, if the set of precondition values is the same as the set of state values. Thus, for each State in the plurality of States, a determination is made if the precondition values of the variables associated with the respective State are equal to the state values that define the respective State. Referring to exemplary SAG 1830 of Fig. 18, suppose that BPM generation system 535 determines this to be true for States S1, S2, S7, and S8. Accordingly, BPM Generation system 535 defines the second set of Initial State candidates to include States S1, S2, S7, and S8. FIG. 19B shows SAG 1830 with the States of the second set of initial state candidates indicated by shading.

At step 1750, a third set of third Initial State candidates is generated by identifying States that are present in both the first set of first Initial State candidates and in the second set of second Initial State candidates. Referring to FIGS. 19A-19B, States S1 and S2 are present in both the first set of Initial State candidates and in the second set of Initial State candidates. Therefore, BPM Generation system 535 defines the third set to include States S1 and S2.

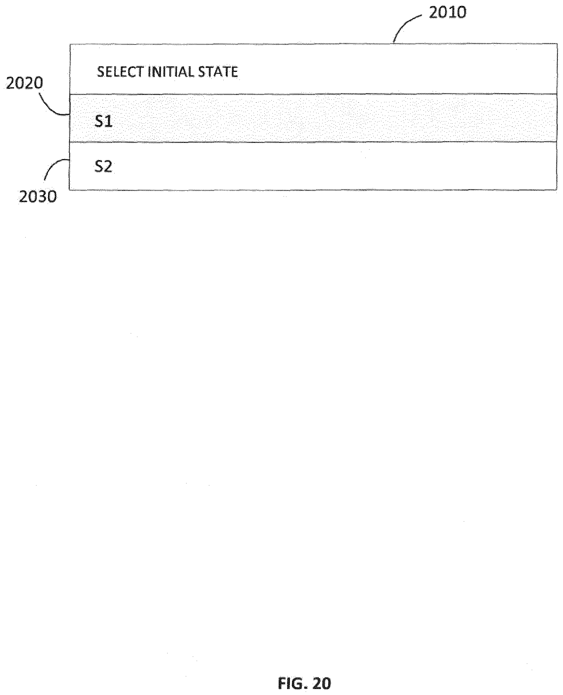

At step 1760, the third set of Initial State candidates is presented to the user. BPM Generation system 535 may present the third set of Initial State candidates to the user in a GUI, for example. FIG. 20 shows a GUI 2010 that presents Initial State candidates to a user and enables the user to select an Initial State in accordance with an embodiment. A first option 2020 showing State S1 and a second option 2030 showing State S2 are displayed.

At step 1770, a selection of one of the third Initial State candidates is received from the user. In the example, the user selects State S1, for example, by clicking on first option 2120.

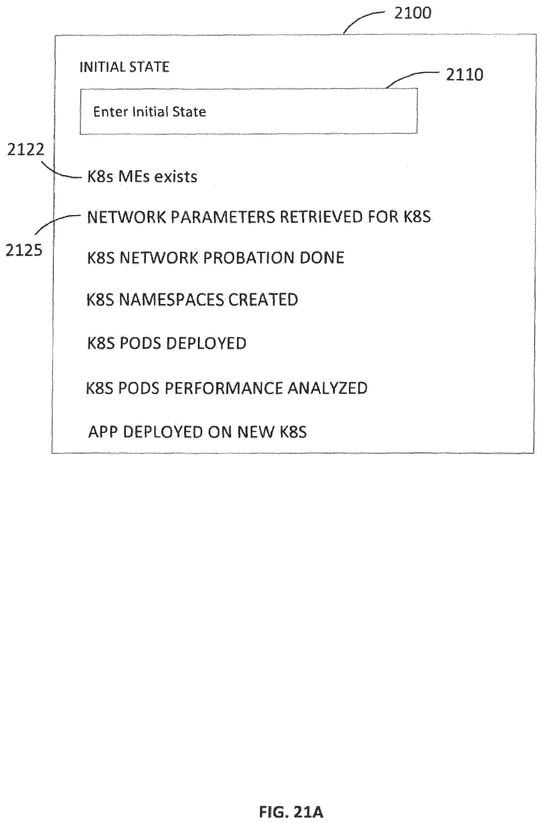

Returning to the illustrative embodiment of FIGS. 6-16, after the user specifies a Final State, BPM generation determines a plurality of possible Initial States and presents to the user a selection of Initial State candidates. FIG. 21A shows a GUI that includes a plurality of possible Initial States in accordance with an embodiment. GUI 2100 includes State 2122 ("K8s MEs exists") and State 2125 ("NETWORK PARAMETERS RETRIEVED FOR K8S"). GUI 100 includes a field 2110 in which a user may specify an Initial State.

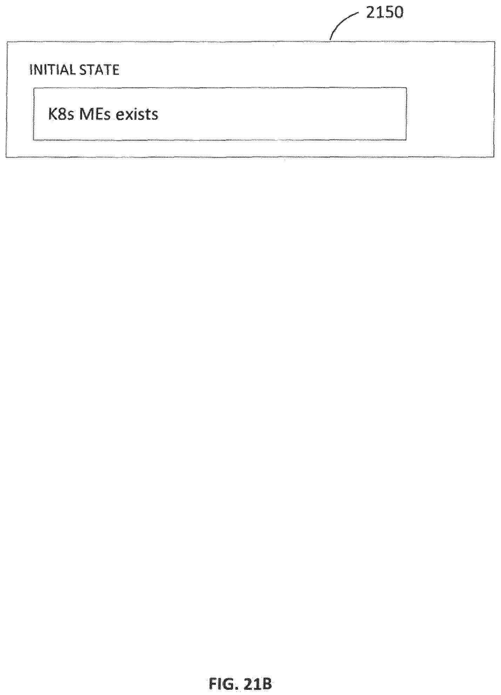

In the illustrative embodiment, the user selects the State "K8s MEs EXISTS." BPM generation system 535 may then display a GUI such as that shown FIG. 21B. FIG. 21B shows a GUI that indicates the Initial State selected by a user in accordance with an embodiment. In the illustrative embodiment, GUI 2150 indicates that the selected Initial State is "K8s MEs EXISTS."

With the selection of State "K8s MEs EXISTS," the user indicates a valid connection of the current computer with the intended set of Kubernetes already setup. Accordingly, BPM generation system 535 considers this and determines that there is no need to set up a connection between the current computer and the Kubernetes.

It is possible that a user may select an Initial State that does not produce a good resulting BPM, for example, if the user is not an expert for the particular use case. If the resulting BPM is undesirable, the user may change the Initial State and generate a new BPM again in an attempt to generate a better result.

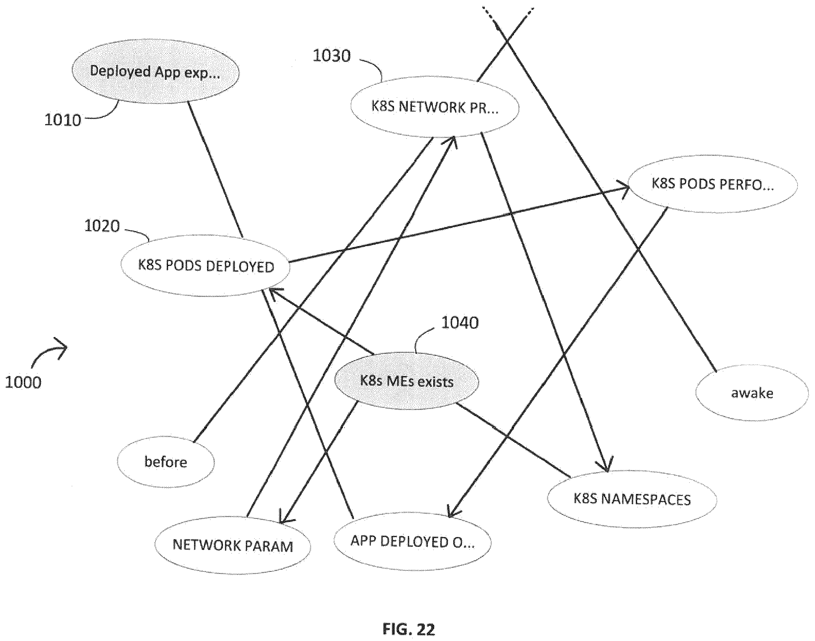

In addition, BPM generation system 535 may display a SAG showing the selected Initial and Final States. FIG. 22 shows State Action Graph (SAG) 1000 in accordance with an embodiment. Initial State 1040 ("K8s MEs EXISTS") and Final State 1010 ("DEPLOYED APP EXPOSED TO THE PUBLIC") are indicated by shading.

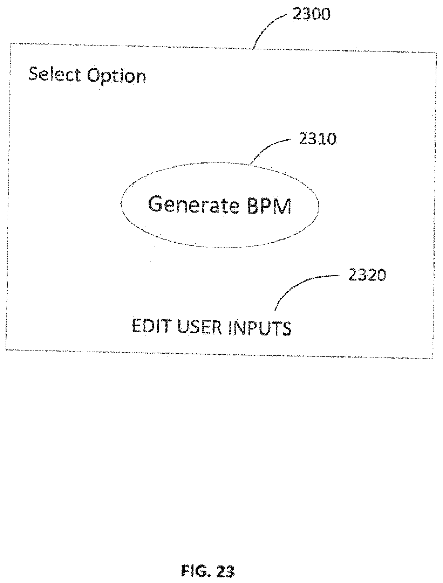

In the illustrative embodiment, after selecting the Initial and Final states, the user may select an option to generate a BPM. FIG. 23 shows a GUI 2300 that includes an option to generate a BPM in accordance with an embodiment. Specifically, GUI 2300 includes a first option 2310 ("Generate BPM") that allows the user to proceed and generate a BPM based on the user inputs already entered, and a second option 2320 ("EDIT USER INPUTS") that allows the user to go back and edit the user inputs.

**Execution of BPM Generation system**

In response to the user's selection of the option to generate a BPM (e.g., first option 2310), BPM generation system 535 begins the process of generating a BPM based on the user inputs. In accordance with an embodiment, BPM Generation system 535 first generates a set of candidate paths from which a best path for the user will be selected.

In order to generate a set of candidate paths, BPM generation system 535 identifies a plurality of possible paths between the Initial and Final State, and determines which paths are actually valid based on the values of context variables. Context variables, and the values of the context variables, are defined based on the input provided by the user. As each path is examined to determine if it is valid, the values of the context variables are initially set based on the Initial Context information provided by the user. As the State-Transition pairs in the respective path are explored, the values of the context variables are updated based on post-condition information associated with each State-Transition pair. If it is determined that a State or Transition in the path is not possible based on the values of the context variables, then the path is deemed invalid. If the State-Transition pairs in a respective path are explored and all of the States and Transitions are determined to be possible, then the path is determined to be valid and is added to the set of candidate paths.

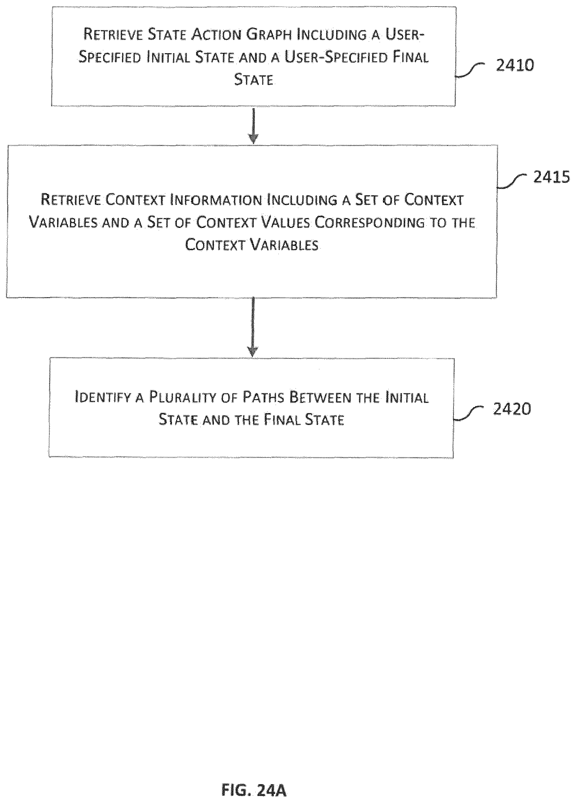

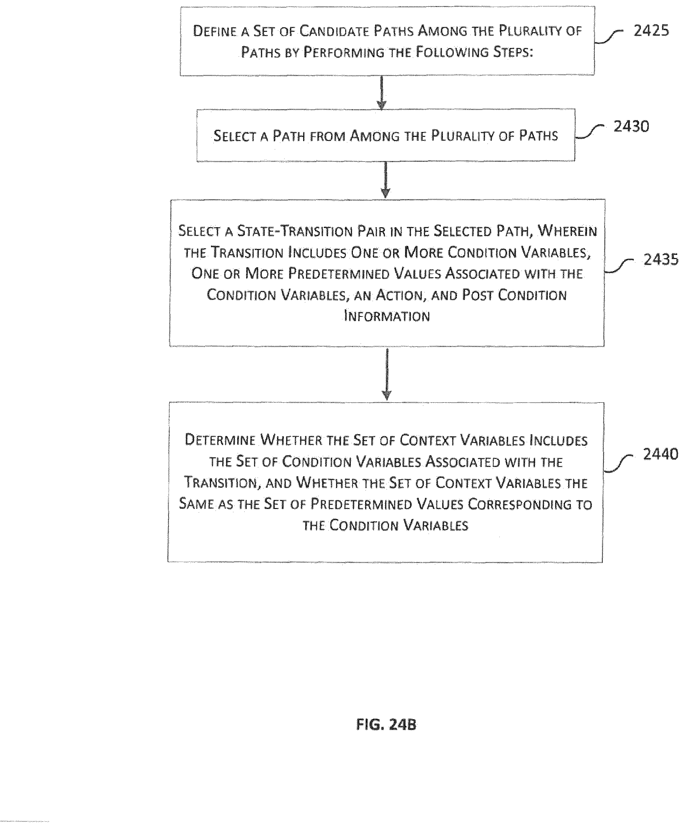

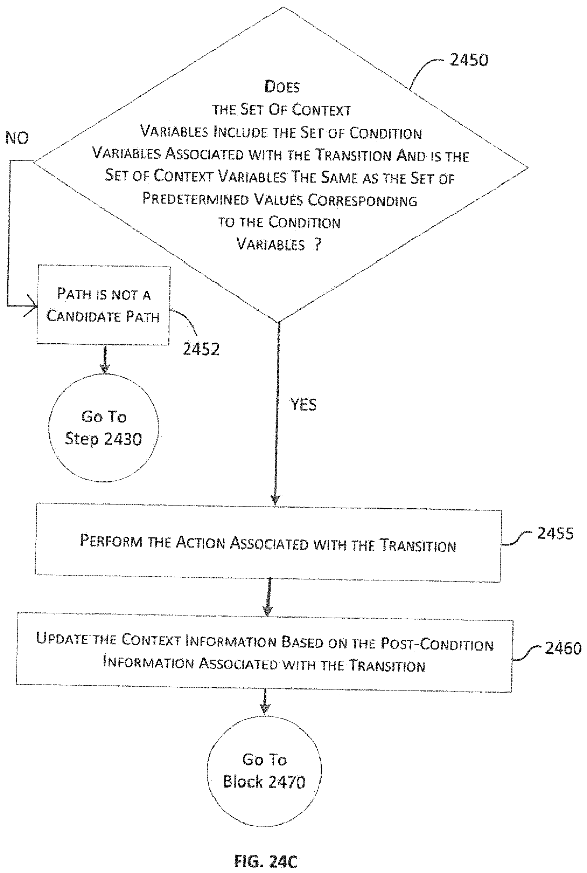

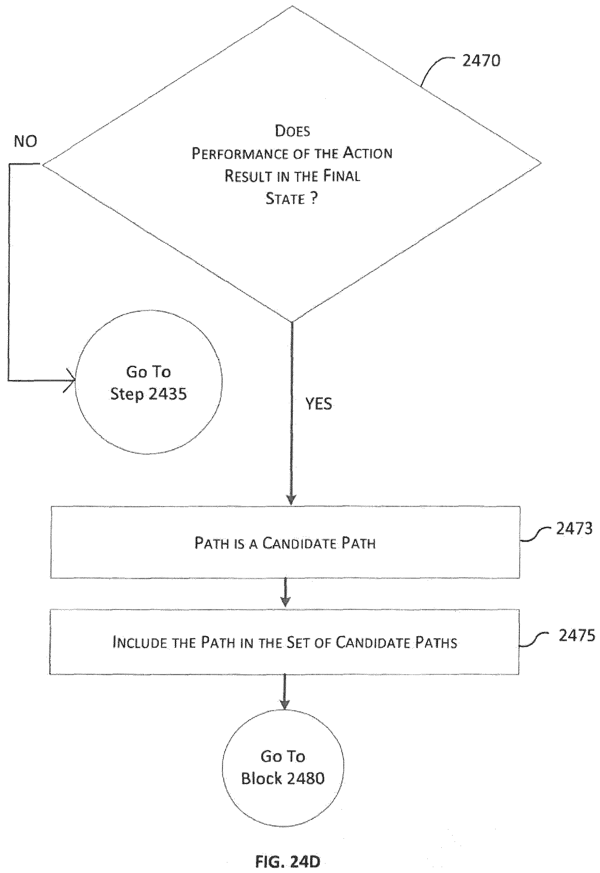

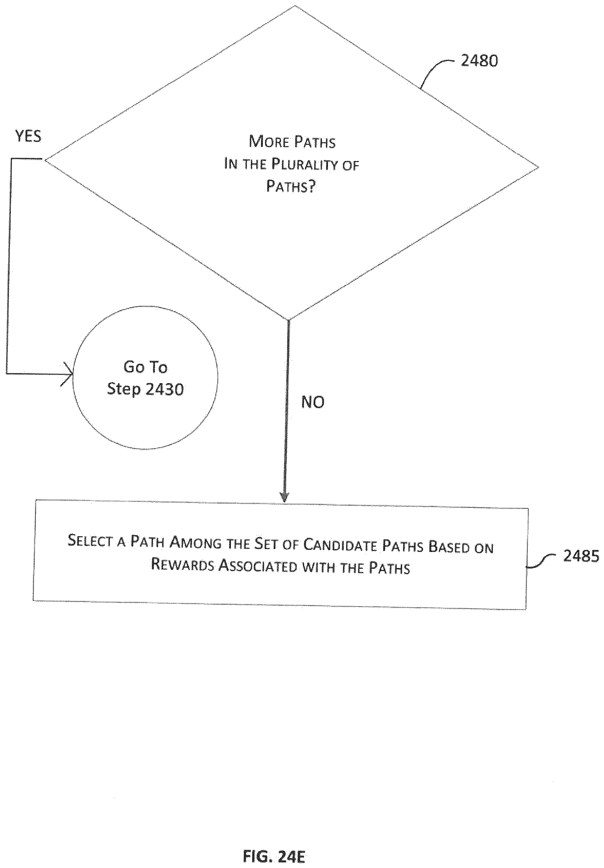

FIGS. 24A-24E include a flowchart of a method of identifying a plurality of paths between an Initial State and a Final State in accordance with an embodiment. FIGS. 24A-24E are discussed with reference to FIG. 7C, which illustrates pre-condition information provided by the user, and FIG. 16, which illustrates context information provided by the user. The pre-condition information provided by the user is used to generate condition variables associated with various Transitions. The user-provided initial context information is used to generate context variables and values for the context variables. The context information is updated as a path is explored, based on post-condition information associated with various Transitions in the path.

At step 2410, a state action graph (SAG) is retrieved including a user-specified Initial State and a user-specified Final State. In the illustrative embodiment, SAG 1000 (shown, for example, in FIG. 22) is retrieved.

At step 2415, context information, including a set of context variables and a set of context values corresponding to the context variables, is retrieved. The context information may include the initial context information defined by the user (for example, the information provided via GUI 1600 shown in FIG. 16).

At step 2420, a plurality of paths between the Initial State and the Final State is identified. In one embodiment, every possible path between the Initial State and the Final State is identified. In the illustrative embodiment, every possible path between the Initial State 1040 and Final State 1010 of SAG 1000 is identified.

Referring to block 2425, a set of candidate paths among the plurality of paths is defined by performing the following steps.

At step 2430, a path is selected from among the plurality of paths. In the illustrative embodiment, one of the paths between Initial State 1040 and Final State 1010 is selected and examined individually.

Before the selected path is examined, BPM generation system 535 initializes the set of context variables. For example, context variables specified in the user-provided initial context information are initialized to the values specified by the user. The State-Transition pairs in the selected path are examined successively from the Initial State to the Final State. As each State-Transition pair along the selected path is examined, the action(s) associated with the relevant Transition are performed, and any pertinent post-conditions are applied. Consequently, the context variables may change as the selected path is examined.

Accordingly, at step 2435, a State-Transition pair in the selected path is selected, wherein the Transition includes one or more condition variables, one or more predetermined values associated with the condition variables, an action, and post-condition information. For example, to begin, the outgoing State-Transition in the selected path from the Initial State is selected. Referring to FIG. 7C, each Transition may be associated with one or more condition variables selected by the user, and predetermined values for those variables, as defined by the user.

At step 2440, a determination is made whether the set of context variables includes the set of condition variables associated with the Transition, and whether the set of context values is the same as the set of predetermined values corresponding to the condition variables. Thus, the condition variables and values are compared to the context variables and values. Thus, for example, to determine whether the particular Transition defined by GUI 1600 of FIG. 16 is possible, a determination is made whether the set of context variables includes "latency" (and any other condition variables defined by the user for this Transition) and, if so, whether the context value for latency equals "100" (and whether any other context values equal the corresponding condition values specified by the user). A Transition is only possible if the condition variables and values match the context variables and values.

Any pre-conditions associated with a particular Transition are evaluated as follows: a pre-condition variable's value is identified from the global list of variables, then the value is compared against the value specified in the pre-condition. A pre-condition expression having the form 'identified value' - 'operator' - 'given value' is evaluated. If this expression is evaluated to true, the Transition occurs, otherwise the Transition does not occur. It should be noted that when a variable used in a pre-condition does not exist in the global list of variables, the pre-condition is assumed to be true.

Referring to block 2450, if the set of context variables includes the set of condition variables associated with the Transition, and the set of context values is the same as the set of predetermined values corresponding to the condition variables, then the routine proceeds to step 2455. Otherwise, the routine proceeds to step 2452.

Referring to step 2452, a determination is made that the path is not a candidate path, and the routine then returns to step 2430 (and another path is selected).

At step 2455, the action associated with the Transition is performed.

At step 2460, the context information is updated based on the post-condition information associated with the Transition.

Referring to block 2470, if performance of the action results in the Final State, then the routine proceeds to step 2473. Otherwise, the routine returns to step 2435.

At step 2473, a determination is made that the path is a candidate path.

At step 2475, the path is included in the set of candidate paths.

Referring to block 2480, if more paths remain in the plurality of paths, then the routine returns to step 2430. Otherwise, the routine proceeds to step 2485.

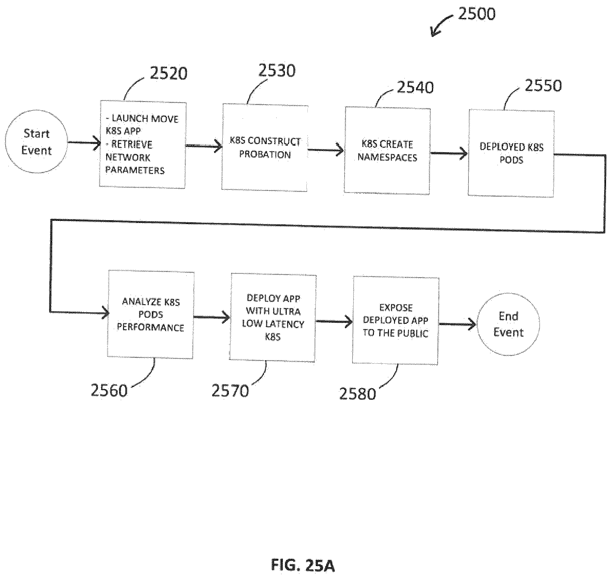

At step 2485, a path among the set of candidate paths is selected based on rewards associated with the paths. For example, BPM generation system 535 may maintain a Q-Table containing Q values (also referred to as reward values) associated with various State-Transition pairs in the SAG. A path having the highest total reward values may be selected. In one embodiment, the total reward value of a path is calculated by adding the reward values of all the State-Transition pairs in the path. Other methods may be used to calculate a total reward value of a path. FIG. 25A shows a path 2500 that may be selected in accordance with an embodiment. Path 2500 includes States 2520, 2530, 2540, 2550, 2560, 2570, and 2580.

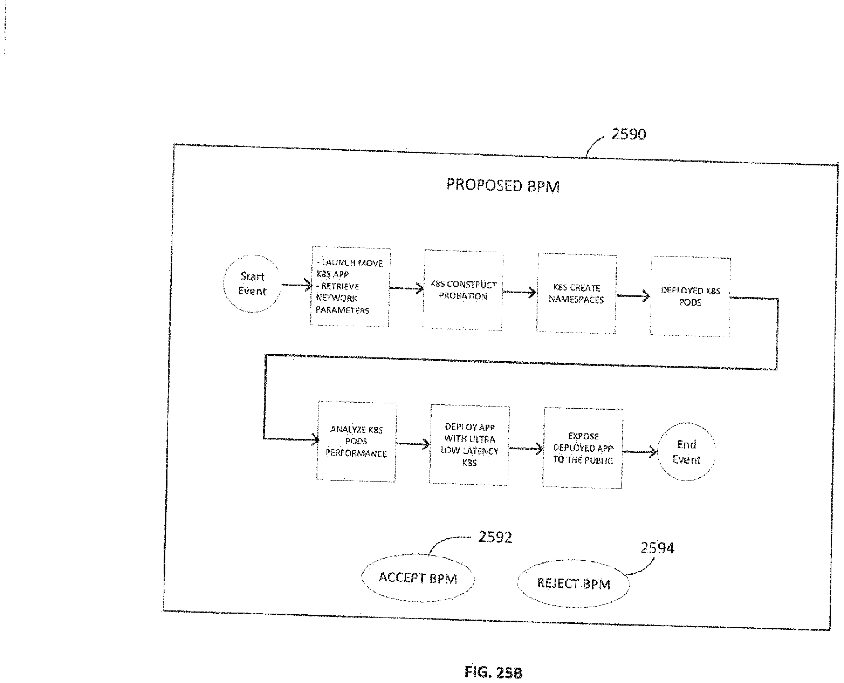

In accordance with an embodiment, the selected path is presented to the user as a proposed BPM, and the user may accept or reject the proposed BPM. FIG. 25B shows a GUI displaying a proposed BPM in accordance with an embodiment. GUI 2590 shows path 2500 as a proposed BPM. GUI 2590 includes an "ACCEPT BPM" option 2592 and a "REJECT BPM" option 2594. If the user is satisfied with the proposed BPM, the user may select option 2592. Otherwise, the user may select option 2594, and in response, BPM generation system 535 generates another BPM.

In accordance with another embodiment, a path is selected from among a set of candidate paths based on reward values associated with the paths. The selected path is presented to the user as a proposed BPM. User input concerning the selected path is received, and the rewards are updated based on the user input in accordance with an embodiment.

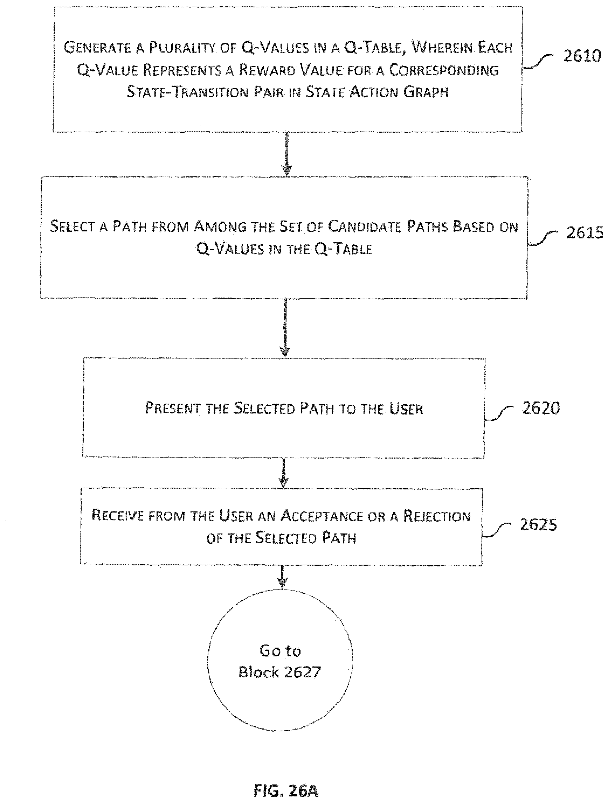

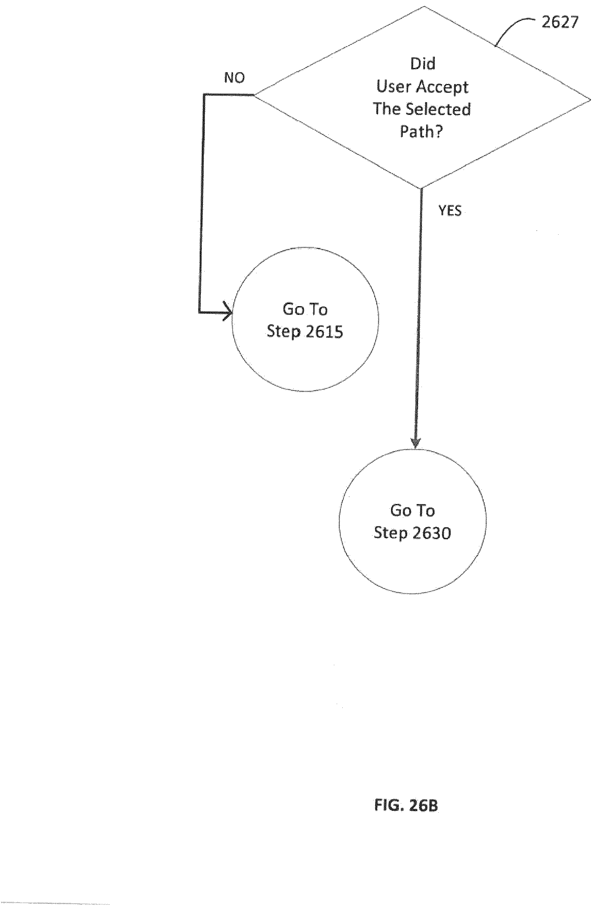

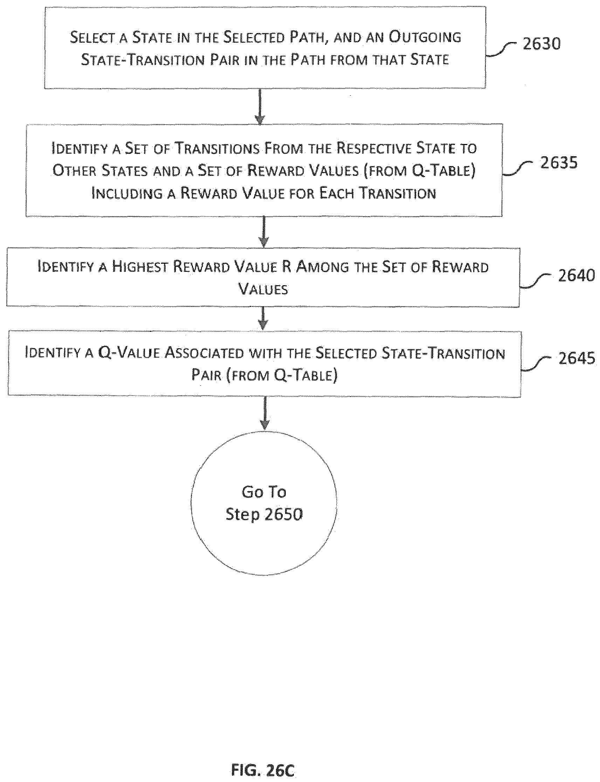

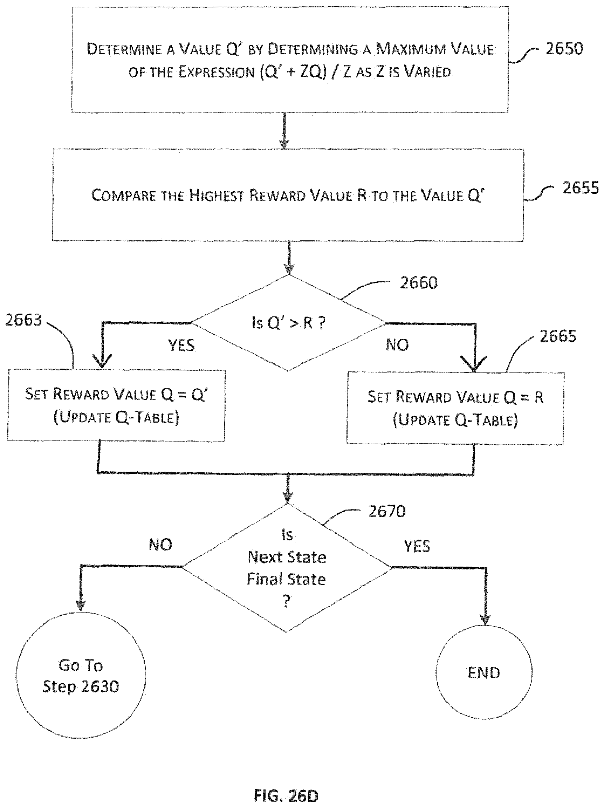

FIGS. 26A-26D include a flowchart of a method of selecting a path from among a set of candidate paths based on reward values associated with the paths, receiving user input concerning the selected path, and updating the rewards based on the user input in accordance with an embodiment.

At step 2610, a plurality of Q-values in a Q-Table are generated, wherein each Q-value corresponds to a State-Transition pair in a state action graph.

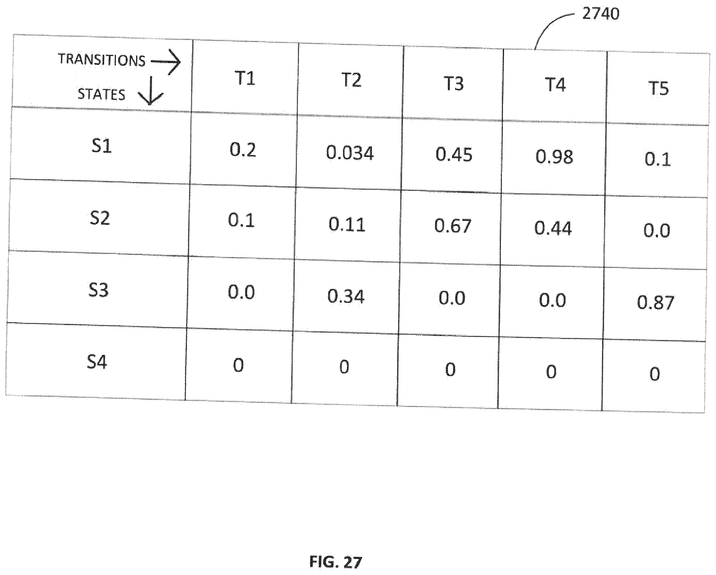

FIG. 27 shows a Q-Table in accordance with an embodiment. Q-Table 2740 defines Q-values, or reward values, for each State-Transition pair in a state action graph. Thus, for example, according to Q-Table 2740, the S1-T1 State-Transition pair has a Q-value of 0.2. Use of Q-Tables is known.

In the illustrative embodiment, when a request to generate a BPM is received from the user, BPM generation system 535 generates a Q-Table and initializes all the values to 0, as shown in Table 2.

**Table 2**

| Transitions ⇒ States ⇓ | LAUNCH MOVE K8S APP-RETRIEVE NETWORK PARAMETERS | K8S CONSTRUCT PROBATION | K8S CREATE NAMESPACES | DEPLOYED K8S PODS | ANALYZE K8S PODS PERFORMANCE | DEPLOYE APP WITH AVERAGE LATENCY K8S | DEPLOY APP WITH ULTRA LOW LATENCY K8S | DEPLOY APP WITH HIGH QUALITY K8S | Expose Deployed App to the public |
|---|---|---|---|---|---|---|---|---|---|
| 8s MEs exists | o | 0 | 0 | 0 | 0 | 0 | 0 | 0 | 0 |
| NETWORK PARAMTERS RETRIEVED FOR K8S | 0 | 0 | 0 | 0 | 0 | 0 | 0 | 0 | 0 |
| K8S NETWORK PROBATION DONE | 0 | 0 | 0 | 0 | 0 | 0 | 0 | 0 | 0 |
| K8S NAMESPACES CREATED | 0 | 0 | 0 | 0 | 0 | 0 | 0 | 0 | 0 |
| K8S PODS DEPLOYED | 0 | 0 | 0 | 0 | 0 | 0 | 0 | 0 | 0 |
| K8S PODS PERFORMANCE ANALYSED | 0 | 0 | 0 | 0 | 0 | 0 | 0 | 0 | 0 |
| APP DEPLOYED ON NEW K8S | 0 | 0 | 0 | 0 | 0 | 0 | 0 | 0 | 0 |
| Deployed App exposed to public | 0 | 0 | 0 | 0 | 0 | 0 | 0 | 0 | 0 |

BPM generation system 535 then populates the table with Q Values. Any suitable method for determining Q-values may be used. For example, in one embodiment, a Temporal-Difference Learning equation (Monte Carlo and Deep Programming) may be used.

In the illustrative embodiment, after BPM generation system 535 populates the Q-Table with Q values, the Q -Table may appear as in Table 3:

**Table 3**

| Transitions ⇒ States ⇓ | LAUNCH MOVE K8S APP - RETRIEVE NETWORK PARAMETERS | K8S CONSTRUCT PROBATION | K8S CREATE NAMESPACES | DEPLOYED K8S PODS | ANALYZE K8S PODS PERFORMANCE | DEPLOYE APP WITH AVERAGE LATENCY K8S | DEPLOY APP WITH ULTRA LOW LATENCY K8S | DEPLOY APP WITH HIGH QUALITY K8S | Expose Deployed App to the public |
|---|---|---|---|---|---|---|---|---|---|
| K8s MEs exists | .122 | 0 | 0 | 0 | 0 | 0 | 0 | 0 | 0 |
| NETWORK PARAMTERS RETRIEVED FOR K8S | 0 | .154 | 0 | 0 | 0 | 0 | 0 | 0 | 0 |
| K8S NETWORK PROBATION DONE | 0 | 0 | .241 | 0 | 0 | 0 | 0 | 0 | 0 |
| K8S NAMESPACES CREATED | 0 | 0 | 0 | .354 | 0 | 0 | 0 | 0 | 0 |
| K8S PODS DEPLOYED | 0 | 0 | 0 | 0 | .4154 | 0 | 0 | 0 | 0 |
| K8S PODS PERFORMANCE ANALYSED | 0 | 0 | 0 | 0 | 0 | .1376 | .6512 | .2314 | 0 |
| APP DEPLOYED ON NEW K8S | 0 | 0 | 0 | 0 | 0 | 0 | 0 | 0 | .5134 |
| Deployed App exposed to public | 0 | 0 | 0 | 0 | 0 | 0 | 0 | 0 | 0 |
| | | | | | | | | | |

At step 2615, a path is selected from among the set of candidate paths based on Q-values in the Q-Table. BPM generation system 535 examines the reward values (represented by Q-values) associated with each of the candidate paths and selects one path based on the values. For example, for each candidate path, the reward values (Q-values) associated with each State-Transition pair in the respective path may be added to generate a total reward value, and the path having a highest total reward value may be selected.

At step 2620, the selected path is presented to the user. BPM generation system 535 may display a GUI that presents the selected path as a proposed BPM, for example.

At step 2625, an acceptance or rejection of the selected path is received from the user. BPM generation system 535 may display a first option to accept the proposed BPM and a second option to reject the proposed BPM. The user may accept the proposed BPM if the user determines that it meets the user's needs. Otherwise, the user may reject the proposed BPM.

Referring to block 2627, if the user accepts the selected path, the routine proceeds to step 2630. If the user rejects the selected path, the routine returns to step 2515 and another path is selected.

At step 2630, a State in the selected path, and an outgoing State-Transition pair from that State, are selected. For example, to begin, the outgoing State-Transition pair in the path from the Initial State is selected.

At step 2635, a set of Transitions from the respective State to other States is identified, and a set of reward values, including a reward value for each Transition in the set of Transitions, is identified (from the Q-Table). A Q-value is identified for each Transition from the Q-Table. When starting at the Initial State, all Transitions from the Initial State are identified.

At step 2640, a transition with the highest reward value R among the set of reward values is identified. In the illustrative example, the highest reward value among all the outgoing Transitions from the Initial State is identified.

At step 2645, a Q-value associated with the selected State-Transition pair is identified from the Q-Table. In the example, the Q-value for the outgoing State-Transition pair in the selected path (from the Initial State) is identified from the Q-Table.

At step 2650, a value Q' is determined by determining a maximum value of the expression:

$$\frac{(Q' + ZQ)}{Z}$$

as Z is varied, where Z is a real number.

At step 2655, the highest reward value R is compared to the value Q'.

Referring to block 2660, if Q' is greater than R, the routine proceeds to step 2663. If Q' is not greater than R, the routine proceeds to block 2665.

At step 2663, the reward value Q is updated to be Q = Q'. The Q-Table is updated accordingly. The routine proceeds to block 2670.

At step 2665, the reward value Q is updated to be Q = R. The Q-Table is updated accordingly. The routine proceeds to block 2670.

Referring to block 2670, if the next State is the Final State, the routine ends. If the next State is not the Final State, the routine returns to step 2630.

In accordance with another embodiment, in order to identify a plurality of possible paths and generate Q values in a Q-Table for each State-Transition pair in each path, BPM generation system 535 starts with the specified Initial State. In the illustrative embodiment, BPM generation system 535 starts with the specified Initial State - "K8s MEs EXISTS." For this Initial State, BPM generation system 535 identifies all outgoing Transitions using the SAG.

When more than one outgoing Transition is identified for a particular state, BPM generation system 535 selects a Transition randomly (with equal probability) from among those identified. This strategy advantageously allows the system to explore all possible options in an agnostic manner, rather than to lean towards a specific Transition which may have a higher reward. It has been observed that random selection is a better way to explore the Transition space.

In existing conventional systems, a Transition is selected from the list of all outgoing Transitions on a State. However, in accordance with one embodiment, a Transition is selected from a list of QUALIFIED outgoing Transitions. A QUALIFIED Transition is defined as a transition whose pre-condition evaluates to True (based on context variables and context values).

In the illustrative embodiment, on the State - K8s MEs EXISTS, according to the SAG, there is only one outgoing Transition, "LAUNCH MOVE K8S APP," - RETRIEVE NETWORK PARAMETERS. In addition, there was no pre-condition specified for this Transition and therefore no condition to evaluate. Therefore, BPM generation system 535 selects this Transition to occur. When this Transition occurs, the system reaches the State defined as the Transition's target state - NETWORK PARAMETERS RETRIEVED FOR K8S. At this moment, BPM generation system 535 checks if the achieved State is the Final State (DEPLOYED APP EXPOSED TO PUBLIC) or not. BPM generation system 535 determines that it is not the Final State; therefore, the system now identifies the outgoing Transitions from the State - NETWORK PARAMETERS RETRIEVED FOR K8S, and selects one of them.

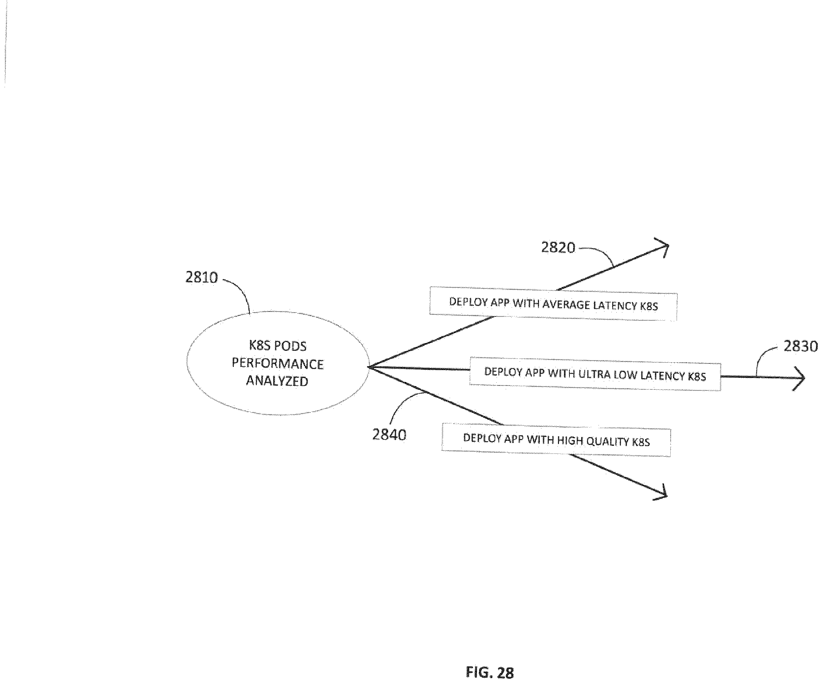

The system continues this process recursively until the system finds the Final State. However, when the system reaches the State - K8S PODS PERFORMANCE ANALYZED, there are three outgoing Transitions. FIG. 28 shows a plurality of outgoing Transitions associated with a State in accordance with an embodiment. Specifically, FIG. 28 shows State 2810 ("K8s PODS PERFORMANCE ANALYZED") and three outgoing Transitions including Transition 2820 ("DEPLOY APP WITH AVERAGE LATENCY K8S"), Transition 2830 ("DEPLOY APP WITH ULTRA LOW LATENCY K8S"), and Transition 2840 ("DEPLOY APP WITH HIGH QUALITY K8S").

At this State - K8s PODS PERFORMANCE ANALYZED, BPM generation system 535 first identifies the list of QUALIFIED Transitions. To evaluate the pre-conditions, BPM generation system 535 maintains a global list of variables and their values. These variables may be provided by the user as an input. To evaluate a pre-condition, the variable used in the pre-condition must exists in the global list of variables. When a pre-condition's variable does not exist in global list of variables, the pre-condition evaluation is ignored and the Transition is assumed as a QUALIFIED Transition. However, when such a variable exists in the global list of variables, this variable's value is extracted from the global list and it is used to evaluate the condition.

In the illustrative embodiment, the user did not provide any Initial Context for the Transition DEPLOY APP WITH ULTRA LOW LATENCY K8S; therefore, this Transition's pre-condition (Latency < 50) is ignored and the Transition become a QUALIFIED Transition. Similarly, other two Transitions DEPLOY APP WITH AVERAGE LATENCY K8S and DEPLOY APP WITH HIGH QUALITY K8S become QUALIFIED Transitions. Given that all the three outgoing Transitions are QUALIFIED Transitions, the system selects one Transition randomly.

Further, the selected Transition occurs and the corresponding target state is achieved e.g., APP DEPLOYED ON NEW K8S. Finally, from this State, the outgoing Transition (EXPOSE DEPLOYED APP TO THE PUBLIC) occurs and the system reaches the target State DEPLOYED APP EXPOSED TO THE PUBLIC, which is the specified Final State.

In this manner BPM generation system 535 identifies one full path between the Initial State and the Final State. For this path, Q values are calculated for each State-Transition pair. To calculate the Q Values for each State-Transition pair, a Temporal-Difference Learning equation (Monte Carlo and Deep Programming) such as that defined below may be used.

$$Q(S_{t,} A_t) = Q(S_t, A_t) + \alpha\,[\,R_{t+1} + \gamma Q(S_{t+1}, A_{t+1}) - Q(S_t, A_t),$$

Where **Q(St, At)** is the Q Value for State (S) and Transition (A) at step t, **R_t** is the Reward at step t and $\alpha$ and $\gamma$ are learning rate and discount factor respectively. Using this equation, Q Values of each State and Transition are identified for a path.

Using these methods, BPM generation system 535 identifies a plurality of possible paths with different permutations and combinations of States and Actions. Identifying and analyzing many paths provides advantages including:

    1. An exhaustive exploration occurs where each possible path, from Initial State to Final State, is identified.
    2. **Q(St, At)** converges over a number of paths and eventually a stable Q Value is achieved for each State-Transition pair.

**Initial to Final State Traversal**

In accordance with an embodiment, after the Q-Table is generated, BPM generation system 535 uses the Q-Table to identify the best path from the Initial State to the Final State. In the Q-Table, a row is selected that corresponds to the Initial State. In the illustrative embodiment, row 1 is selected which corresponds to the Initial State - K8s MEs EXISTS. In this row, a column is then selected which has the highest Q Value. In the illustrative embodiment, column 1 is selected which corresponds to the Transition - LAUNCH MOVE K8S APP - RETRIEVE NETWORK PARAMETERS. The highest Q value indicates that the corresponding Transition has the best Reward value on the given State. Accordingly, this Transition is considered to occur on the given State. The target State is then identified from this Transition which is - NETWORK PARAMETERS RETRIEVED FOR K8S. The same procedure is applied recursively, and the best Transition is identified. This process continues until the Final State is reached which is DEPLOYED APP EXPOSED TO PUBLIC. This procedure is followed to ensure that the identified path from Initial State to Final State has the highest cumulative Q Value, which effectively ensures that following this path will produce the highest Reward value.

In various embodiments, the method steps described herein, including the method steps described in the flowcharts included in the Drawings, may be performed in an order different from the particular order described or shown. In other embodiments, other steps may be provided, or steps may be eliminated, from the described methods.

Systems, apparatus, and methods described herein may be implemented using digital circuitry, or using one or more computers using well-known computer processors, memory units, storage devices, computer software, and other components. Typically, a computer includes a processor for executing instructions and one or more memories for storing instructions and data. A computer may also include, or be coupled to, one or more mass storage devices, such as one or more magnetic disks, internal hard disks and removable disks, magneto-optical disks, optical disks, etc.

Systems, apparatus, and methods described herein may be implemented using computers operating in a client-server relationship. Typically, in such a system, the client computers are located remotely from the server computer and interact via a network. The client-server relationship may be defined and controlled by computer programs running on the respective client and server computers.

Systems, apparatus, and methods described herein may be used within a network-based cloud computing system. In such a network-based cloud computing system, a server or another processor that is connected to a network communicates with one or more client computers via a network. A client computer may communicate with the server via a network browser application residing and operating on the client computer, for example. A client computer may store data on the server and access the data via the network. A client computer may transmit requests for data, or requests for online services, to the server via the network. The server may perform requested services and provide data to the client computer(s). The server may also transmit data adapted to cause a client computer to perform a specified function, e.g., to perform a calculation, to display specified data on a screen, etc.

Systems, apparatus, and methods described herein may be implemented using a computer program product tangibly embodied in an information carrier, e.g., in a non-transitory machine-readable storage device, for execution by a programmable processor; and the method steps described herein, including one or more of the steps shown in the flowcharts included in the Drawings, may be implemented using one or more computer programs that are executable by such a processor. A computer program is a set of computer program instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

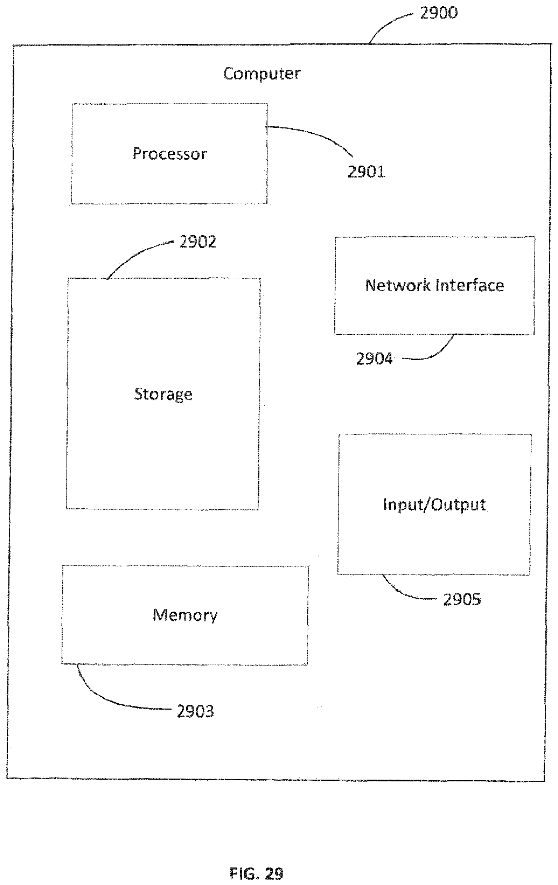

A high-level block diagram of an exemplary computer that may be used to implement systems, apparatus and methods described herein is illustrated in FIG. 29. Computer 2900 includes a processor 2901 operatively coupled to a data storage device 2902 and a memory 2903. Processor 2901 controls the overall operation of computer 2900 by executing computer program instructions that define such operations. The computer program instructions may be stored in data storage device 2902, or other computer readable medium, and loaded into memory 2903 when execution of the computer program instructions is desired. Thus, the method steps described in the flowcharts shown in the Drawings can be defined by the computer program instructions stored in memory 2903 and/or data storage device 2902 and controlled by the processor 2901 executing the computer program instructions. For example, the computer program instructions can be implemented as computer executable code programmed by one skilled in the art to perform an algorithm defined by the method steps described in the flowcharts shown in the Drawings. Accordingly, by executing the computer program instructions, the processor 2901 executes an algorithm defined by the method steps described in the flowcharts shown in the Drawings. Computer 2900 also includes one or more network interfaces 2904 for communicating with other devices via a network. Computer 2900 also includes one or more input/output devices 2905 that enable user interaction with computer 2900 (e.g., display, keyboard, mouse, speakers, buttons, etc.).

Processor 2901 may include both general and special purpose microprocessors, and may be the sole processor or one of multiple processors of computer 2900. Processor 2901 may include one or more central processing units (CPUs), for example. Processor 2901, data storage device 2902, and/or memory 2903 may include, be supplemented by, or incorporated in, one or more application-specific integrated circuits (ASICs) and/or one or more field programmable gate arrays (FPGAs).

Data storage device 2902 and memory 2903 each include a tangible non-transitory computer readable storage medium. Data storage device 2902, and memory 2903, may each include high-speed random access memory, such as dynamic random access memory (DRAM), static random access memory (SRAM), double data rate synchronous dynamic random access memory (DDR RAM), or other random access solid state memory devices, and may include non-volatile memory, such as one or more magnetic disk storage devices such as internal hard disks and removable disks, magneto-optical disk storage devices, optical disk storage devices, flash memory devices, semiconductor memory devices, such as erasable programmable read-only memory (EPROM), electrically erasable programmable read-only memory (EEPROM), compact disc read-only memory (CD-ROM), digital versatile disc read-only memory (DVD-ROM) disks, or other non-volatile solid state storage devices.

Input/output devices 2905 may include peripherals, such as a printer, scanner, display screen, etc. For example, input/output devices 2905 may include a display device such as a cathode ray tube (CRT) or liquid crystal display (LCD) monitor for displaying information to the user, a keyboard, and a pointing device such as a mouse or a trackball by which the user can provide input to computer 2900.

Any or all of the systems and apparatus discussed herein, and components thereof, may be implemented using a computer such as computer 2900.

One skilled in the art will recognize that an implementation of an actual computer or computer system may have other structures and may contain other components as well, and that FIG. 29 is a high level representation of some of the components of such a computer for illustrative purposes.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope and spirit of the invention.

## Claims

1. A method comprising:

   receiving from a user information defining at least a plurality of states, a plurality of transitions, an initial state, and a final state;
   automatically defining a plurality of paths between the initial state and the final state, each path traversing at least one state and at least one transition;
   determining a Q-value for each state-transition pair in the plurality of paths; and
   selecting as a business process model a path having a highest Q-value.

2. The method of claim 1, further comprising:

   receiving from the user second information defining the plurality of states and the plurality of transitions;
   receiving from the user third information specifying one of the plurality of states as the final state;
   defining a state action graph (SAG) based on the plurality of states and the plurality of transitions;
   determining an initial state by performing a series of operations including:

      defining a first set of first initial state candidates by:

         starting at the final state, traversing the SAG to generate a plurality of first initial state candidates; and
         including the plurality of first initial state candidates in the first set of initial state candidates;

      defining a second set of second initial state candidates by:

         identifying a plurality of states in the SAG;
         for each state in the plurality of states:

            identifying one or more state variables associated with the state and a predetermined state value for each variable, thereby defining a set of predetermined state values;
            determining an actual value for each variable, thereby defining a set of actual values; and
            including the state in the second set of second initial state candidates, if the set of actual values is the same as the set of predetermined state values;

      defining a third set of third initial state candidates to include states that are present in both the first set of first initial state candidates and in the second set of second initial state candidates;
      presenting the third set of third initial state candidates to the user;
      receiving from the user a selection of one of the third initial state candidates; and
      defining the initial state to be the selected one of the third initial state candidates.

3. The method of claim 2, wherein automatically defining a plurality of paths between the initial state and the final state further comprises:

   retrieving a set of context variables and corresponding set of context variable values;
   identifying a plurality of paths between the initial state and the final state; and

defining a set of candidate paths between the initial state and the final state by repeatedly performing a series of first operations including:

> selecting one of the paths from the plurality of paths; and
> repeatedly performing, for each state-transition pair in the selected path, a series of second operations including:
>
>> selecting a state-transition pair in the selected path, wherein the transition of the state-transition pair is associated with one or more condition variables, and one or more predetermined condition values each corresponding to a respective one of the one or more condition variables, an action, and a post-condition;
>> determining whether the set of context variables includes the set of condition variables and whether the set of context variable values is the same as the set of predetermined condition values; and
>> if the set of context variables includes the set of condition variables and the set of context variable values is the same as the set of predetermined condition values, performing a series of third operations including:
>>
>>> performing the action;
>>> updating the set of context variables and the set of context variable values based on the post-condition associated with the transition; and
>>> including the selected path to the set of candidate paths, if performing the action results in the final state.

4. The method of claim 3, further comprising:

> generating a plurality of Q-values in a Q-table, wherein each Q-value represents a reward value for a state-transition pair in the SAG;
> selecting a path from among the set of candidate paths based on the Q-values in the Q-table;
> presenting the selected path to the user;
> receiving from the user an acceptance of the selected path or a rejection of the path; and
> if an acceptance of the selected path is received from the user, increasing at least one Q-value associated with at least one state-transition pair in the selected path.

5. The method of claim 4, wherein increasing at least one Q-value associated with at least one state-transition pair in the selected path further comprises:
for each state-transition pair in the selected path, performing a fourth series of operations comprising:

> identifying from the Q-table a Q-value associated with the transition of the respective state-transition pair;
> identifying a set of outgoing transitions from the state of the respective state-transition pair;
> identifying, for each outgoing transition, a Q-value from the Q-table, thereby generating a set of Q-values;
> identifying a highest Q-value in the set of Q-values;
> determining a value Q' by determining a maximum value of the expression:

$$\frac{(Q' + ZQ)}{Z}$$

> as Z is varied, where Z is a real number;
> updating the Q-value associated with the transition of the respective state-transition pair to be equal to the highest Q-value in the set of Q-values, if the highest Q-value in the set of Q-values is greater than Q'; and
> updating the Q-value associated with the transition of the respective state-transition pair to be equal to Q', if Q' is greater than the highest Q-value in the set of Q-values.

6. The method of claim 1, wherein the business process model represents a process in a domain related to one of networking, security systems, datacenter technologies (cloud) computing, robotics, and information of things (IoT) devices.

7. A system comprising:

a memory adapted to store data; and
a processor adapted to:

receive from a user information defining at least a plurality of states, a plurality of transitions, an initial state, and a final state;
automatically define a plurality of paths between the initial state and the final state, each path traversing at least one state and at least one transition;
determine a Q-value for each state-transition pair in the plurality of paths; and
select as a business process model a path having a highest Q-value.

8. The system of claim 7, wherein the processor is further adapted to:

receive from the user second information defining the plurality of states and the plurality of transitions;
receive from the user third information specifying one of the plurality of states as the final state;
define a state action graph (SAG) based on the plurality of states and the plurality of transitions; and
determine an initial state by performing a series of operations including:

defining a first set of first initial state candidates by:

starting at the final state, traversing the SAG to generate a plurality of first initial state candidates; and
including the plurality of first initial state candidates in the first set of initial state candidates;

defining a second set of second initial state candidates by:

identifying a plurality of states in the SAG;
for each state in the plurality of states:

identifying one or more state variables associated with the state and a predetermined state value for each variable, thereby defining a set of predetermined state values;
determining an actual value for each variable, thereby defining a set of actual values; and
including the state in the second set of second initial state candidates, if the set of actual values is the same as the set of predetermined state values;

defining a third set of third initial state candidates to include states that are present in both the first set of first initial state candidates and in the second set of second initial state candidates;
presenting the third set of third initial state candidates to the user;
receiving from the user a selection of one of the third initial state candidates; and
defining the initial state to be the selected one of the third initial state candidates.

9. The system of claim 8, wherein automatically defining a plurality of paths between the initial state and the final state further comprises:

retrieving a set of context variables and corresponding set of context variable values;
identifying a plurality of paths between the initial state and the final state;
defining a set of candidate paths between the initial state and the final state by repeatedly performing a series of first operations including:

selecting one of the paths from the plurality of paths;
repeatedly performing, for each state-transition pair in the selected path, a series of second operations including:

selecting a state-transition pair in the selected path, wherein the transition of the state-transition pair is associated with one or more condition variables, and one or more predetermined condition values each corresponding to a respective one of the one or more condition variables, an action, and a post-condition;
determining whether the set of context variables includes the set of condition variables and whether the set of context variable values is the same as the set of predetermined condition values; and
if the set of context variables includes the set of condition variables and the set of context variable values is the same as the set of predetermined condition values, performing a series of third operations including:

> performing the action;
> updating the set of context variables and the set of context variable values based on the post-condition associated with the transition; and
> including the selected path to the set of candidate paths, if performing the action results in the final state.

10. The system of claim 9, wherein the processor is further adapted to:

> generate a plurality of Q-values in a Q-table, wherein each Q-value represents a reward value for a state-transition pair in the SAG;
> select a path from among the set of candidate paths based on the Q-values in the Q-table;
> present the selected path to the user;
> receive from the user an acceptance of the selected path or a rejection of the path; and
> if an acceptance of the selected path is received from the user, increase at least one Q-value associated with at least one state-transition pair in the selected path.

11. The system of claim 10, wherein the processor is adapted to increase at least one Q-value associated with at least one state-transition pair in the selected path by:
for each state-transition pair in the selected path, performing a fourth series of operations comprising:

> identifying from the Q-table a Q-value associated with the transition of the respective state-transition pair;
> identifying a set of outgoing transitions from the state of the respective state-transition pair;
> identifying, for each outgoing transition, a Q-value from the Q-table, thereby generating a set of Q-values;
> identifying a highest Q-value in the set of Q-values;
> determining a value Q' by determining a maximum value of the expression:

$$\frac{(Q' + ZQ)}{Z}$$

> as Z is varied, where Z is a real number;
> updating the Q-value associated with the transition of the respective state-transition pair to be equal to the highest Q-value in the set of Q-values, if the highest Q-value in the set of Q-values is greater than Q'; and
> updating the Q-value associated with the transition of the respective state-transition pair to be equal to Q', if Q' is greater than the highest Q-value in the set of Q-values.

12. The system of claim 7, wherein the business process model represents a process in a domain related to one of networking, security systems, datacenter technologies (cloud) computing, robotics, and information of things (IoT) devices.

13. A non-transitory computer readable medium having stored thereon software instructions that, when executed by a processor, cause the processor to execute a set of operations comprising:

> receiving from a user information defining at least a plurality of states, a plurality of transitions, an initial state, and a final state;
> automatically defining a plurality of paths between the initial state and the final state, each path traversing at least one state and at least one transition;
> determining a Q-value for each state-transition pair in the plurality of paths; and
> selecting as a business process model a path having a highest Q-value.

EP 4 113 401 A1

FIG. 1

27

**FIG. 2**

301

305
310
315

Router → has → Firewall

302

320
325
330

Kubernetes → has → Pod

FIG. 3

FIG. 4A

**FIG. 4B**

EP 4 113 401 A1

**FIG. 5A**

535

BPM Generation System

Processor

545

Memory

550

580

AI
Engine

560

Storage

User Inputs

564

SAG

566

Rewards Database

573

Q Table

576

FIG. 5B

RECEIVE FROM A USER INFORMATION DEFINING AN INITIAL STATE, A FINAL STATE, A PLURALITY OF STATES AND A PLURALITY OF TRANSITIONS — 610

AUTOMATICALLY DEFINE A PLURALITY OF PATHS BETWEEN THE INITIAL STATE AND THE FINAL STATE, EACH PATH TRAVERSING AT LEAST ONE STATE AND AT LEAST ONE TRANSITION — 620

DETERMINE A REWARD VALUE FOR EACH PATH IN THE PLURALITY OF PATHS — 630

SELECT AS A BUSINESS PROCESS MODEL A PATH HAVING A HIGHEST REWARD VALUE — 640

FIG. 6

CREATE STATE

NAME ⌐ 712

K8s ME EXISTS

DESCRIPTION ⌐ 714

A connection with Kubernetes is already established

716 ☐ INITIAL

718 ☐ FINAL

791 CANCEL    793 SAVE

**FIG. 7A**

730

**CREATE ACTION**

NAME ⌐ 732

LAUNCH MOVE K8S APP – RETRIEVE NETWORK PARAMETERS

DESCRIPTION ⌐ 734

RETRIEVES KUBERNETES NETWORK PARAMETERS SUCH AS NETWORK PACKETS, NETWORK COUNT, TTL, ETC.

736

K8S -WORKLOAD-PLACEMENT-AI

738

**CREATE SERVICE**

TARGET STATE

NETWORK PARAMETERS RETRIEVED FOR K8S

740

PRE-CONDITION

742

791 CANCEL   SAVE ⌐ 793

**FIG. 7B**

730

CREATE ACTION

NAME ⌐ 732

DEPLOY APP WITH ULTRA LOW LATENCY K8S

DESCRIPTION ⌐ 734

DEPLOY A CONTAINERIZED APPLICATION IN A KUBERNETES POD WHERE THE LATENCY IS ULTRA LOW

736

K8S -WORKLOAD-PLACEMENT-AI

738

DEPLOY USER APP [ULTRA LOW LATENCY]

TARGET STATE

APP DEPLOYED ON NEW K8S

740

PRE-CONDITION ⌐ 743

742

LATENCY

< 50

791 CANCEL SAVE ⌐ 793

FIG. 7C

810

ATTACH ACTION

SELECT ACTIONS TO ATTACH — 820

SEARCH FOR ACTIONS [                    ]

840

ATTACHED ACTIONS: 1

831

☐ KBS CONSTRUCTION PROBATION

☐ K8S CREATE NAMESPACES

833

☐ DEPLOYED K8S PODS

☐ ANALYZE K8S PODS PERFORMANCE

☐ DEPLOY APP WITH AVERAGE LATENCY K8S

☐ DEPLOY APP WITH ULTRA LOW LATENCY K8S

☐ DEPLOY APP WITH HIGH QUALITY K8S

☐ LAUNCH MOVE K8S APP – RETRIEVE NETWORK PARAMETERS

842

892 — CANCEL     SAVE — 894

FIG. 8

910

ATTACH ACTION

SELECT ACTIONS TO ATTACH — 920

SEARCH FOR ACTIONS [                    ]

— 940

ATTACHED ACTIONS: 3

931

☐ LAUNCH MOVE K8S APP – RETRIEVE NETWORK PARAMETERS

☐ DEPLOY APP WITH AVERAGE LATENCY

942

933 ☐ K8S CONSTRUCT PROBATION

☐ DEPLOY APP WITH ULTRA LOW LATENCY

☐ K8S CREATE NAMESPACES

☐ DEPLOYED K8S PODS

☐ DEPLOY APP WITH HIGH QUALITY K8S

☐ ANALYZE K8S PODS PERFORMANCE

☐ ACTION FROM UI

☐ PROCESS TYPE TEST

994

992 CANCEL    SAVE

FIG. 9

FIG. 10

1160

FINAL STATE

Deployed App exposed to public

**FIG. 11**

1200

LEARNING RATE

0.6

FIG. 12

1300

DISCOUNT FACTOR

0.4

FIG. 13

1400

FINAL STATE REWARD

10000

**FIG. 14**

1500

Select Transitions

2 – DEPLOY K8S PODS

2 – ANALYZE K8S PODS PERFORMANCE

1520

2 – DEPLOY APP WITH AVERAGE LATENCY K8S

2 – DEPLOY APP WITH ULTRA LOW LATENCY K8S

2 – DEPLOY APP WITH HIGH QUALITY K8S

FIG. 15

1600

INITIAL CONTEXT

| NAME | OPERATOR | VALUE |
|------|----------|-------|
| latency | = | 100 |

FIG. 16

DEFINE FIRST SET OF FIRST INITIAL STATE CANDIDATES BY
PERFORMING THE FOLLOWING STEPS:          1708

START AT USER-DEFINED FINAL STATE          1710

TRAVERSE STATE ACTION GRAPH TO IDENTIFY ONE OR
MORE FIRST INITIAL STATE CANDIDATES
(USE ANY TRAVERSAL METHOD)          1720

INCLUDE THE ONE OR MORE FIRST INITIAL STATE
CANDIDATES IN FIRST SET          1723

FIG. 17A

DEFINE SECOND SET OF SECOND INITIAL STATE CANDIDATES BY PERFORMING THE FOLLOWING STEPS: ⎰ 1727

IDENTIFY A PLURALITY OF STATES IN THE STATE ACTION GRAPH ⎰ 1730

FOR EACH STATE IN THE PLURALITY OF STATES:
(1) IDENTIFY ONE OR MORE VARIABLES ASSOCIATED WITH THE STATE AND A STATE VALUE FOR EACH VARIABLE, THEREBY DEFINING A SET OF STATE VALUES
(2) DETERMINING A PRECONDITION VALUE FOR EACH VARIABLE, THEREBY DEFINING A SET OF PRECONDITION VALUES
(3) INCLUDE THE STATE IN A SECOND SET OF SECOND INITIAL STATE CANDIDATES, IF THE SET OF PRECONDITION VALUES IS THE SAME AS THE SET OF STATE VALUES
⎰ 1740

FIG. 17B

GENERATE A THIRD SET OF THIRD INITIAL STATE CANDIDATES BY IDENTIFYING STATES THAT ARE PRESENT IN BOTH THE FIRST SET OF FIRST INITIAL STATE CANDIDATES AND IN THE SECOND SET OF SECOND INITIAL STATE CANDIDATES — 1750

PRESENT THE THIRD SET OF THIRD INITIAL STATE CANDIDATES TO THE USER — 1760

RECEIVE FROM THE USER A SELECTION OF ONE OF THE THIRD INITIAL STATE CANDIDATES — 1770

**FIG. 17C**

FIG. 18

FIG. 19A

FIG. 19B

2010

SELECT INITIAL STATE

2020

S1

S2

2030

FIG. 20

2100

INITIAL STATE

2110

Enter Initial State

2122

K8s MEs exists

NETWORK PARAMETERS RETRIEVED FOR K8S

2125

K8S NETWORK PROBATION DONE

K8S NAMESPACES CREATED

K8S PODS DEPLOYED

K8S PODS PERFORMANCE ANALYZED

APP DEPLOYED ON NEW K8S

FIG. 21A

2150

INITIAL STATE

K8s MEs exists

**FIG. 21B**

FIG. 22

EP 4 113 401 A1

FIG. 23

RETRIEVE STATE ACTION GRAPH INCLUDING A USER-SPECIFIED INITIAL STATE AND A USER-SPECIFIED FINAL STATE — 2410

RETRIEVE CONTEXT INFORMATION INCLUDING A SET OF CONTEXT VARIABLES AND A SET OF CONTEXT VALUES CORRESPONDING TO THE CONTEXT VARIABLES — 2415

IDENTIFY A PLURALITY OF PATHS BETWEEN THE INITIAL STATE AND THE FINAL STATE — 2420

FIG. 24A

DEFINE A SET OF CANDIDATE PATHS AMONG THE PLURALITY OF PATHS BY PERFORMING THE FOLLOWING STEPS: ⟋ 2425

SELECT A PATH FROM AMONG THE PLURALITY OF PATHS ⟋ 2430

SELECT A STATE-TRANSITION PAIR IN THE SELECTED PATH, WHEREIN THE TRANSITION INCLUDES ONE OR MORE CONDITION VARIABLES, ONE OR MORE PREDETERMINED VALUES ASSOCIATED WITH THE CONDITION VARIABLES, AN ACTION, AND POST CONDITION INFORMATION ⟋ 2435

DETERMINE WHETHER THE SET OF CONTEXT VARIABLES INCLUDES THE SET OF CONDITION VARIABLES ASSOCIATED WITH THE TRANSITION, AND WHETHER THE SET OF CONTEXT VARIABLES THE SAME AS THE SET OF PREDETERMINED VALUES CORRESPONDING TO THE CONDITION VARIABLES ⟋ 2440

FIG. 24B

2450

DOES
THE SET OF CONTEXT
VARIABLES INCLUDE THE SET OF CONDITION
VARIABLES ASSOCIATED WITH THE TRANSITION AND IS THE
SET OF CONTEXT VARIABLES THE SAME AS THE SET OF
PREDETERMINED VALUES CORRESPONDING
TO THE CONDITION
VARIABLES ?

NO

PATH IS NOT A
CANDIDATE PATH

2452

Go To
Step 2430

YES

PERFORM THE ACTION ASSOCIATED WITH THE TRANSITION

2455

UPDATE THE CONTEXT INFORMATION BASED ON THE POST-CONDITION
INFORMATION ASSOCIATED WITH THE TRANSITION

2460

Go To
Block 2470

FIG. 24C

FIG. 24D

MORE PATHS
IN THE PLURALITY OF
PATHS? — 2480

YES

Go To
Step 2430

NO

SELECT A PATH AMONG THE SET OF CANDIDATE PATHS BASED ON
REWARDS ASSOCIATED WITH THE PATHS — 2485

FIG. 24E

2500

2520

- LAUNCH MOVE
K8S APP
- RETRIEVE
NETWORK
PARAMETERS

Start
Event

2530

K8S CONSTRUCT
PROBATION

2540

K8S CREATE
NAMESPACES

2550

DEPLOYED K8S
PODS

2560

ANALYZE K8S
PODS
PERFORMANCE

2570

DEPLOY APP
WITH ULTRA
LOW LATENCY
K8S

2580

EXPOSE
DEPLOYED APP
TO THE PUBLIC

End
Event

FIG. 25A

63

PROPOSED BPM

2590

Start Event

- LAUNCH MOVE K8S APP
- RETRIEVE NETWORK PARAMETERS

K8S CONSTRUCT PROBATION

K8S CREATE NAMESPACES

DEPLOYED K8S PODS

ANALYZE K8S PODS PERFORMANCE

DEPLOY APP WITH ULTRA LOW LATENCY K8S

EXPOSE DEPLOYED APP TO THE PUBLIC

End Event

ACCEPT BPM

2592

REJECT BPM

2594

FIG. 25B

GENERATE A PLURALITY OF Q-VALUES IN A Q-TABLE, WHEREIN EACH Q-VALUE REPRESENTS A REWARD VALUE FOR A CORRESPONDING STATE-TRANSITION PAIR IN STATE ACTION GRAPH  — 2610

SELECT A PATH FROM AMONG THE SET OF CANDIDATE PATHS BASED ON Q-VALUES IN THE Q-TABLE  — 2615

PRESENT THE SELECTED PATH TO THE USER  — 2620

RECEIVE FROM THE USER AN ACCEPTANCE OR A REJECTION OF THE SELECTED PATH  — 2625

Go to
Block 2627

FIG. 26A

2627

NO

Did
User Accept
The Selected
Path?

YES

Go To
Step 2615

Go To
Step 2630

**FIG. 26B**

SELECT A STATE IN THE SELECTED PATH, AND AN OUTGOING STATE-TRANSITION PAIR IN THE PATH FROM THAT STATE — 2630

IDENTIFY A SET OF TRANSITIONS FROM THE RESPECTIVE STATE TO OTHER STATES AND A SET OF REWARD VALUES (FROM Q-TABLE) INCLUDING A REWARD VALUE FOR EACH TRANSITION — 2635

IDENTIFY A HIGHEST REWARD VALUE R AMONG THE SET OF REWARD VALUES — 2640

IDENTIFY A Q-VALUE ASSOCIATED WITH THE SELECTED STATE-TRANSITION PAIR (FROM Q-TABLE) — 2645

Go To
Step 2650

FIG. 26C

DETERMINE A VALUE Q' BY DETERMINING A MAXIMUM VALUE
OF THE EXPRESSION (Q' + ZQ) / Z AS Z IS VARIED — 2650

COMPARE THE HIGHEST REWARD VALUE R TO THE VALUE Q' — 2655

2660

Is Q' > R ?

2663

YES

NO

2665

SET REWARD VALUE Q = Q'
(UPDATE Q-TABLE)

SET REWARD VALUE Q = R
(UPDATE Q-TABLE)

2670

NO

Is
Next State
Final State
?

YES

Go To
Step 2630

END

**FIG. 26D**

2740

| TRANSITIONS → <br> STATES ↓ | T1 | T2 | T3 | T4 | T5 |
|---|---|---|---|---|---|
| S1 | 0.2 | 0.034 | 0.45 | 0.98 | 0.1 |
| S2 | 0.1 | 0.11 | 0.67 | 0.44 | 0.0 |
| S3 | 0.0 | 0.34 | 0.0 | 0.0 | 0.87 |
| S4 | 0 | 0 | 0 | 0 | 0 |

FIG. 27

FIG. 28

2900

Computer

Processor

2901

2902

Network Interface

2904

Storage

Input/Output

2905

Memory

2903

**FIG. 29**

Europäisches
Patentamt

European
Patent Office

Office européen
des brevets

# EUROPEAN SEARCH REPORT

Application Number

EP 22 18 2661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/171438 A1 (FRANCHITTI JEAN-CLAUDE L [US]) 6 June 2019 (2019-06-06) * the whole document * ----- | 1-13 | INV. G06Q10/00 G06Q10/04 G06Q10/06 |
| X | US 2021/004711 A1 (GUPTA ANUJ [IN] ET AL) 7 January 2021 (2021-01-07) * the whole document * ----- | 1-13 | |
| X | US 2020/065118 A1 (NAG DEV [US] ET AL) 27 February 2020 (2020-02-27) * the whole document * ----- | 1-13 | |

TECHNICAL FIELDS
SEARCHED      (IPC)

G06Q

The present search report has been drawn up for all claims

| Place of search | Date of completion of the search | Examiner |
|---|---|---|
| Munich | 28 October 2022 | Anastasov, Yuliyan |

EPO FORM 1503 03.82 (P04C01)

## ANNEX TO THE EUROPEAN SEARCH REPORT
## ON EUROPEAN PATENT APPLICATION NO.

EP 22 18 2661

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2022

| Patent document cited in search report | | Publication date | Patent family member(s) | | Publication date |
|---|---|---|---|---|---|
| US 2019171438 | A1 | 06-06-2019 | US | 2019171438 A1 | 06-06-2019 |
| | | | US | 2020167145 A1 | 28-05-2020 |
| | | | US | 2022197625 A1 | 23-06-2022 |
| | | | WO | 2019113308 A1 | 13-06-2019 |
| US 2021004711 | A1 | 07-01-2021 | CN | 112183708 A | 05-01-2021 |
| | | | US | 2021004711 A1 | 07-01-2021 |
| US 2020065118 | A1 | 27-02-2020 | NONE | | |

EPO FORM P0459

For more details about this annex : see Official Journal of the European Patent Office, No. 12/82